# EUROPEAN PATENT APPLICATION

(11) **EP 4 598 160 A1**
(43) Date of publication of application: **06.08.2025**
(21) Application number: 23871834.0
(22) Date of filing: 08.09.2023
(51) Int. Cl.: H04W 56/00, H04W 72/0446, H04W 72/1268

(54) **TERMINAL DEVICE, BASE STATION DEVICE, AND COMMUNICATION METHOD**

(30) Priority: 27.09.2022 JP 2022153650
(71) Applicant: Sharp Kabushiki Kaisha, Sakai City, Osaka 590-8522 (JP)
(72) Inventor: FUKUI Takahisa, Sakai City, Osaka 590-8522 (JP); YOKOMAKURA Kazunari, Sakai City, Osaka 590-8522 (JP); MORIMOTO Ryota, Sakai City, Osaka 590-8522 (JP); WAN Hua, Sakai City, Osaka 590-8522 (JP)
(74) Representative: Müller-Boré & Partner Patentanwälte PartG mbB
(86) International application number: PCT/JP2023/032895
(87) International publication number: WO 2024/070597

(57) **Abstract**

Included are a receiver configured to receive a PDCCH to which first DCI is mapped, and a transmitter configured to transmit a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter.

## Description

### Technical Field

The present invention relates to a terminal apparatus, a base station apparatus, and a communication method.

This application claims priority to JP 2022-153650 filed on September 27, 2022, the contents of which are incorporated herein by reference.

### Background Art

In the 3^{rd} Generation Partnership Project (3GPP, trade name), a radio access method and a radio network for cellular mobile communications (hereinafter also referred to as "Long Term Evolution (LTE)" or "Evolved Universal Terrestrial Radio Access (EUTRA)") have been studied. In LTE, a base station apparatus is also referred to as an evolved NodeB (eNodeB) and a terminal apparatus is also referred to as a User Equipment (UE). LTE is a cellular communication system in which multiple areas covered by base station apparatuses are arranged in a form of cells. A single base station apparatus may manage multiple serving cells.

The 3GPP has been studying a next generation standard (New Radio or NR) (NPL 1) to make a proposal for International Mobile Telecommunication (IMT)-2020, a standard for a next generation mobile communication system developed by the International Telecommunication Union (ITU). NR is to satisfy requirements for three scenarios including enhanced Mobile BroadBand (eMBB), massive Machine Type Communication (mMTC), and Ultra Reliable and Low Latency Communication (URLLC) in a single technology framework.

In the 3GPP, extension of services supported by NR has been studied (NPL 2).

### Citation List

### Non Patent Literature

NPL 1: "New SID proposal: Study on New Radio Access Technology", RP-160671, NTT docomo, 3GPP TSG RAN Meeting #71, Goteborg, Sweden, 7th-10th March, 2016.
NPL 2: "Release 17 package for RAN", RP-193216, RAN chairman, RAN1 chairman, RAN2 chairman, RAN3 chairman, 3GPP TSG RAN Meeting #86, Sitges, Spain, 9th-12th December, 2019
NPL 3: "Release 18 package summary", RP-213469, RAN chairman, RAN1 chairman, RAN2 chairman, RAN3 chairman, 3GPP TSG RAN Meeting #94-e, 6th-17th December, 2021

### Summary of Invention

### Technical Problem

An aspect of the present invention provides a terminal apparatus that efficiently performs communication, a communication method used for the terminal apparatus, a base station apparatus that efficiently performs communication, and a communication method used for the base station apparatus.

### Solution to Problem

(1) A first aspect of the present invention is a terminal apparatus including a receiver configured to receive a PDCCH to which first DCI is mapped, and a transmitter configured to transmit a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter.
(2) A second aspect of the present invention is a base station apparatus including a transmitter configured to transmit a PDCCH to which first DCI is mapped, and a receiver configured to receive a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter.
(3) A third aspect of the invention is a communication method used for a terminal apparatus, the method including the steps of receiving a PDCCH to which first DCI is mapped, and transmitting a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter.
(4) A fourth aspect of the present invention is a communication method used for a base station apparatus, the method including the steps of transmitting a PDCCH to which first DCI is mapped, and receiving a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter.

### Advantageous Effects of Invention

According to an aspect of the present invention, the terminal apparatus can efficiently perform communication. The base station apparatus can efficiently perform communication.

### Brief Description of Drawings

FIG. 1 is a conceptual diagram of a radio communication system according to an aspect of the present embodiment.
FIG. 2 is an example illustrating a relationship between the subcarrier spacing configuration µ, the number of OFDM symbols per slot N^{slot}_{symb}, and a cyclic Prefix (CP) configuration according to an aspect of the present embodiment.
FIG. 3 is a diagram illustrating an example of a configuration method of a resource grid according to an aspect of the present embodiment.
FIG. 4 is a diagram illustrating a configuration example of a resource grid 3001 according to an aspect of the present embodiment.
FIG. 5 is a schematic block diagram illustrating a configuration example of a base station apparatus 3 according to an aspect of the present embodiment.
FIG. 6 is a schematic block diagram illustrating a configuration example of a terminal apparatus 1 according to an aspect of the present embodiment.
FIG. 7 is a diagram illustrating a configuration example of an SS/PBCH block according to an aspect of the present embodiment.
FIG. 8 is a diagram illustrating an example of monitoring occasions for search space sets according to an aspect of the present embodiment.
FIG. 9 is a diagram illustrating a first example of dropping in a second uplink according to an aspect of the present embodiment.
FIG. 10 is a diagram illustrating a second example of dropping in the second uplink according to an aspect of the present embodiment.

### Description of Embodiments

An embodiment of the present invention will be described below.

floor(C) may be a floor function for a real number C. For example, floor(C) may be a function that outputs a maximum integer in a range of not exceeding the real number C. ceil(D) may be a ceiling function for a real number D. For example, ceil(D) may be a function that outputs a minimum integer in a range of not falling below the real number D. mod(E, F) may be a function that outputs a remainder obtained by dividing E by F. mod(E, F) may be a function that outputs a value corresponding to the remainder obtained by dividing E by F. exp(G) = e^G. Here, e is a Napier's constant. H^I represents H to the power of I. max(J, K) is a function that outputs a maximum value out of J and K. Here, in a case that J and K are equal, max(J, K) is a function that outputs J or K. min(L, M) is a function that outputs a maximum value out of L and M. Here, in a case that L and M are equal, min(L, M) is a function that outputs L or M. round(N) is a function that outputs an integer value of a value closest to N. "·" represents multiplication.

In the radio communication system according to an aspect of the present embodiment, at least Orthogonal Frequency Division Multiplex (OFDM) is used. The OFDM symbol is a time domain unit of the OFDM. The OFDM symbol includes at least one or multiple subcarriers. The OFDM symbol is converted into a time-continuous signal in baseband signal generation. In a downlink, at least Cyclic Prefix-Orthogonal Frequency Division Multiplex (CP-OFDM) is used. In an uplink, either CP-OFDM or Discrete Fourier Transform-spread-Orthogonal Frequency Division Multiplex (DFT-s-OFDM) is used. DFT-s-OFDM may be given by applying Transform precoding to the CP-OFDM.

The OFDM symbol may be a term including a CP added to the OFDM symbol. That is, a certain OFDM symbol may include the certain OFDM symbol and the CP added to the certain OFDM symbol.

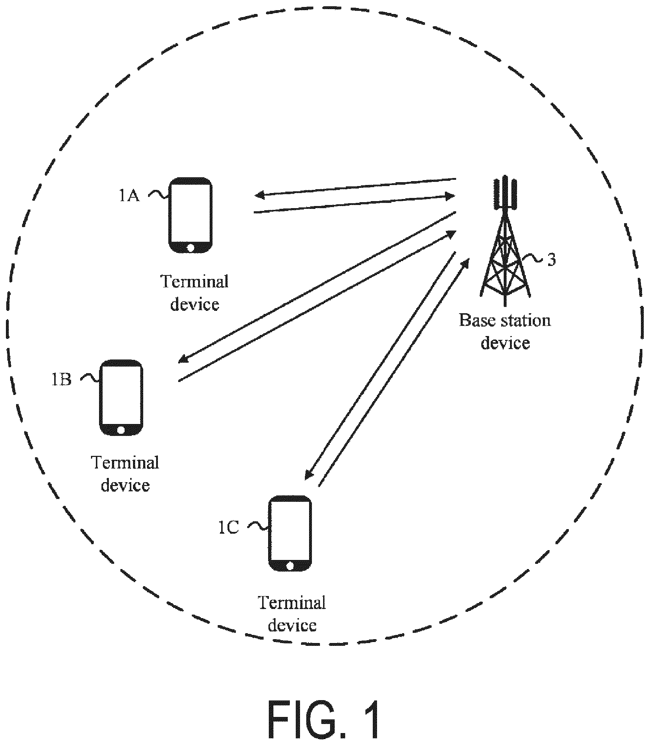

FIG. 1 is a conceptual diagram of a radio communication system according to an aspect of the present embodiment. In FIG. 1, the radio communication system includes at least terminal apparatuses 1A to 1C and a base station apparatus 3 (Base station #3 (BS #3)). Hereinafter, the terminal apparatuses 1A to 1C are also referred to as a terminal apparatus 1 (User Equipment #1 (UE #1)).

The base station apparatus 3 may include one or multiple transmission apparatuses (or transmission points, transmission and/or reception apparatuses, transmission and/or reception points). In a case that the base station apparatus 3 includes multiple transmission apparatuses, the multiple transmission apparatuses may be arranged at different positions. For example, the base station apparatus 3 may include a transmission apparatus 3a and a transmission apparatus 3b. For example, the base station apparatus 3 may include a transmission and/or reception point 3a and a transmission and/or reception point 3b. For example, the base station apparatus 3 may include a transmission and/or reception apparatuses 3a and a transmission and/or reception apparatus 3b.

The base station apparatus 3 may provide one or multiple serving cells. Each serving cell may be defined as a set of resources used for radio communication. The serving cell is also referred to as a cell.

The serving cell may include one or both of one downlink component carrier (downlink carrier) and one uplink component carrier (uplink carrier). The serving cell may include either or both of two or more downlink component carriers, and/or two or more uplink component carriers. The downlink component carrier and the uplink component carrier are also collectively referred to as a component carrier (carrier).

For example, for each component carrier, one resource grid may be given. For each set of one component carrier and a certain subcarrier spacing configuration µ, one resource grid may be given. Here, the subcarrier spacing configuration µ is also referred to as numerology. For example, for a set of a certain antenna port p, a certain subcarrier spacing configuration µ, and a certain transmission direction x, one resource grid may be given.

The resource grid includes N^{size, µ}_{grid}, ₓN^{RB}_{sc} subcarriers. Here, the resource grid starts from a common resource block N^{start, µ}_{grid, x}. The common resource block N^{start, µ}_{grid, x} is also referred to as a reference point of the resource grid.

The resource grid includes N^{subframe, µ}_{symb} OFDM symbols.

The subscript x added to the parameter associated with the resource grid indicates the transmission direction. For example, the subscript x may be used to indicate either of a downlink or an uplink.

N^{size, µ}_{grid, x} is an offset configuration indicated by a parameter provided by the RRC layer (e.g., parameter CarrierBandwidth). N^{start, µ}_{grid, x} is a band configuration indicated by a parameter provided by the RRC layer (e.g., parameter, OffsetToCarrier). The offset configuration and the band configuration are configurations used for configuring an SCS-specific carrier.

The SubCarrier Spacing (SCS) Δf for a certain subcarrier spacing configuration µ may be Δf = 2^{µ}*15 kHz. Here, the subcarrier spacing configuration µ may indicate one of 0, 1, 2, 3, or 4.

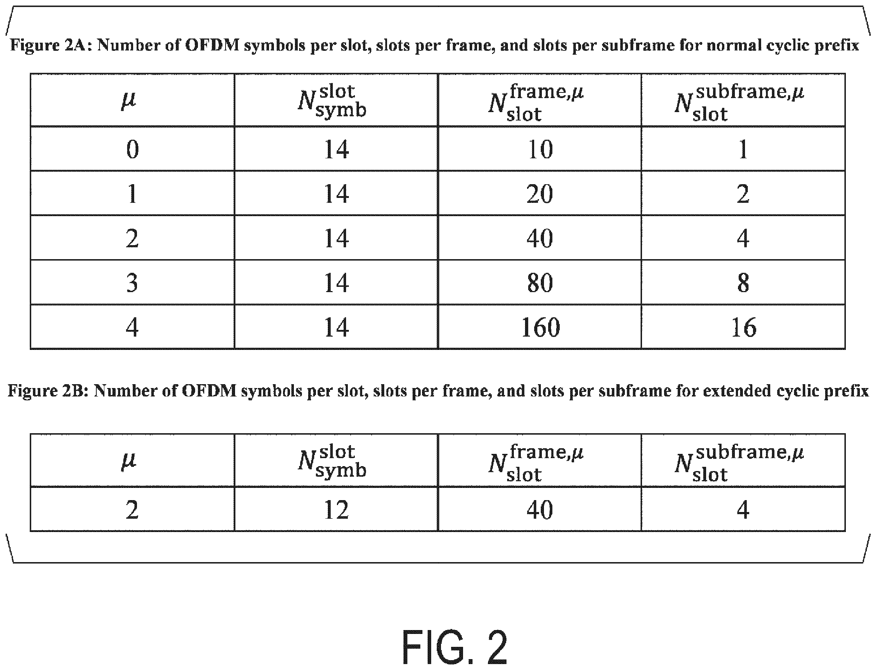

FIG. 2 is an example illustrating a relationship between the subcarrier spacing configuration µ, the number of OFDM symbols per slot N^{slot}_{symb}, and a cyclic Prefix (CP) configuration according to an aspect of the present embodiment. In FIG. 2A, for example, in a case that the subcarrier spacing configuration µ is two and the CP configuration is a normal cyclic prefix (normal CP), N^{slot}_{symb} = 14, N^{frame, µ}ₛₗₒₜ = 40, and N^{subframe, µ}ₛₗₒₜ = 4. In FIG. 2B, for example, in a case that the subcarrier spacing configuration µ is two and the CP configuration is an extended cyclic prefix (extended CP), N^{slot}_{symb} = 12, N^{frame, µ}ₛₗₒₜ = 40, and N^{subframe, µ}ₛₗₒₜ = 4.

The time unit T_{c} may be used to represent the length of the time domain. The time unit T_{c} is T_{c} = 1/(Δfₘₐₓ · N_{f}). Δfₘₐₓ = 480 kHz. N_{f} = 4096. A constant κ is κ = Δfₘₐₓ · N_{f}/(Δf_{ref}N_{f, ref}) = 64. Δf_{ref} is 15 kHz. N_{f, ref} is 2048.

Transmission of a signal in the downlink and/or transmission of a signal in the uplink may be organized into a radio frame (system frame, frame) having the length T_{f}. T_{f} = (ΔfₘₐₓN_{f}/100) · Tₛ = 10 ms. The radio frame includes 10 subframes. The length T_{sf} of the subframe is (ΔfₘₐₓN_{f}/1000) · Tₛ = 1 ms. The number of OFDM symbols per subframe is N^{subframe, µ}_{symb} = N^{slot}_{symb}N^{subframe, µ}ₛₗₒₜ.

A length of one slot may be determined based on the subcarrier spacing configuration µ. In a case that µ is 0, the length of one slot may be 1 ms. In a case that µ is 1, the length of one slot may be 0.5 ms. In a case that µ is 2, the length of one slot may be 0.25 ms. In a case that µ is 3, the length of one slot may be 0.125 ms.

On one carrier, there is a first set of one or more frames in the uplink and a second set of one or multiple frames in the downlink. An uplink frame for transmission from the terminal apparatus 1 is started T_{TA} before a start of a downlink frame. T_{TA} may be (N_{TA}·N_{TA, offset)}T_{c}.

The OFDM symbol is a time domain unit of one communication scheme. For example, the OFDM symbol may be a time domain unit of CP-OFDM. The OFDM symbol may be a time domain unit of DFT-s-OFDM.

The slot may include multiple OFDM symbols. For example, N^{slot}_{symb} continuous OFDM symbols may constitute one slot. For example, in normal CP configuration, N^{slot}_{symb} may be 14. In extended CP configuration, N^{slot}_{symb} may be 12.

For a certain subcarrier spacing configuration µ, the number and indices of slots included in the subframe may be given. For example, slot indices n^{µ}ₛ may be given in ascending order in the subframe with integer values within a range of 0 to N^{subframe, µ}ₛₗₒₜ - 1. For the subcarrier spacing configuration µ, the number and indices of slots included in the radio frame may be given. Slot indices n^{µ}_{s, f} may be given in ascending order in the radio frame with integer values within a range of 0 to N^{frame, µ}ₛₗₒₜ - 1.

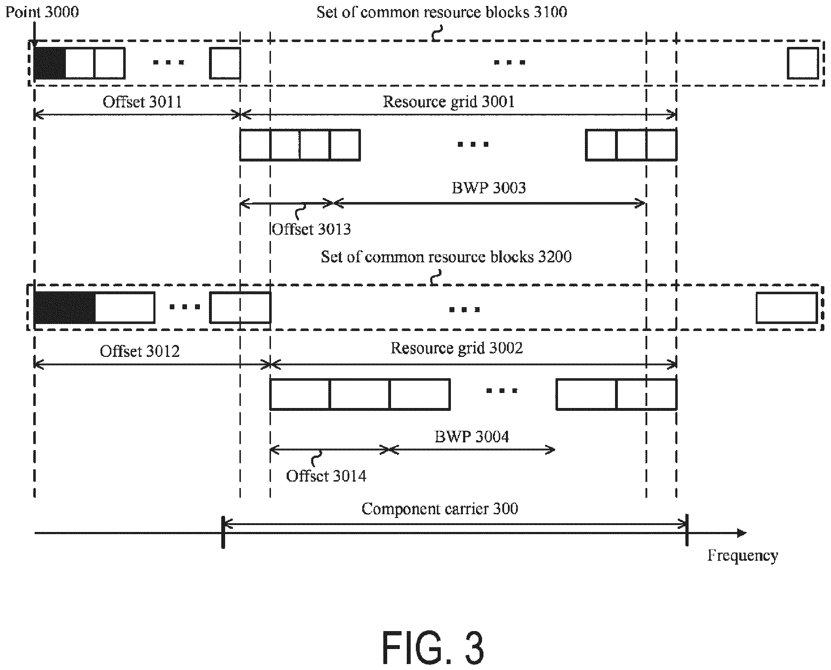

FIG. 3 is a diagram illustrating an example of a configuration method of the resource grid according to an aspect of the present embodiment. The horizontal axis of FIG. 3 represents a frequency domain. FIG. 3 illustrates a configuration example of a resource grid of a subcarrier spacing µ₁ in a component carrier 300, and a configuration example of a resource grid of a subcarrier spacing µ₂ in the certain component carrier. As described above, for a certain component carrier, one or multiple subcarrier spacings may be configured. In FIG. 3, it is assumed that µ₁ = µ₂ - 1, but various aspects of the present embodiment are not limited to the condition of µ₁ = µ₂ - 1.

The component carrier 300 is a band having a predetermined width in the frequency domain.

A Point 3000 is an identifier for identifying a certain subcarrier. The point 3000 is also referred to as a point A. A Common resource block (CRB) set 3100 is a set of common resource blocks for the subcarrier spacing configuration µ₁.

In the common resource block set 3100, a common resource block (solid black block in the common resource block set 3100 in FIG. 3) including the point 3000 is also referred to as a reference point of the common resource block set 3100. The reference point of the common resource block set 3100 may be a common resource block having an index of 0 in the common resource block set 3100.

An offset 3011 is an offset from the reference point of the common resource block set 3100 to a reference point of a resource grid 3001. The offset 3011 is represented by the number of common resource blocks for the subcarrier spacing configuration µ₁. The resource grid 3001 includes N^{size,µ}_{grid1, x} common resource blocks starting from the reference point of the resource grid 3001.

An offset 3013 is an offset from the reference point of the resource grid 3001 to a reference point (N^{start, µ}_{BWP, i1}) of a BandWidth Part (BWP) 3003 having an index of i1.

A common resource block set 3200 is a set of common resource blocks for the subcarrier spacing configuration µ₂.

In the common resource block set 3200, a common resource block (solid black block in the common resource block set 3200 in FIG. 3) including the point 3000 is also referred to as a reference point of the common resource block set 3200. The reference point of the common resource block set 3200 may be a common resource block having an index of 0 in the common resource block set 3200.

An offset 3012 is an offset from the reference point of the common resource block set 3200 to a reference point of a resource grid 3002. The offset 3012 is represented by the number of common resource blocks for the subcarrier spacing µ₂. The resource grid 3002 includes N^{size, µ}_{grid2, x} common resource blocks starting from the reference point of the resource grid 3002.

An offset 3014 is an offset from the reference point of the resource grid 3002 to a reference point (N^{start, µ}_{BWP, i2}) of a BWP 3004 having an index of i2.

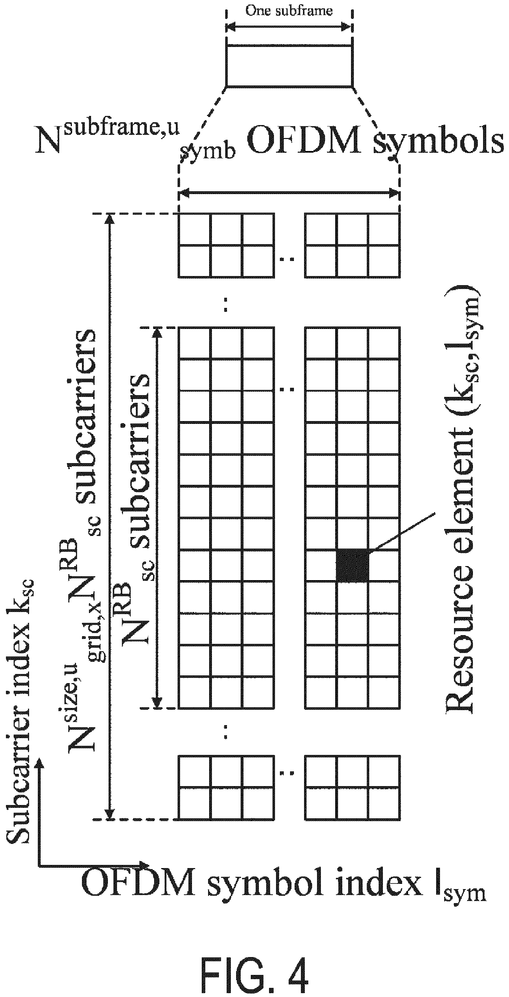

FIG. 4 is a diagram illustrating a configuration example of the resource grid 3001 according to an aspect of the present embodiment. In the resource grid of FIG. 4, the horizontal axis corresponds to an OFDM symbol index l_{sym}, and the vertical axis corresponds to a subcarrier index k_{sc}. The resource grid 3001 includes N^{size,µ}_{grid1, x}N^{RB}_{sc} subcarriers, and N^{subframe, µ}_{symb} OFDM symbols. In the resource grid, a resource identified by the subcarrier index k_{sc} and the OFDM symbol index l_{sym} is also referred to as a Resource Element (RE).

The Resource Block (RB) includes N^{RB}_{sc} consecutive subcarriers. The resource block is a general term for a common resource block, a Physical Resource Block (PRB), and a Virtual Resource Block (VRB). Here, N^{RB}_{sc} is 12.

A resource block unit is a set of resources corresponding to one OFDM symbol in one resource block. That is, one resource block unit includes 12 resource elements corresponding to one OFDM symbol in one resource block.

The common resource blocks for a certain subcarrier spacing configuration µ are assigned indices in ascending order from 0 in the frequency domain in a certain common resource block set (indexing). The common resource block having an index of 0 for a certain subcarrier spacing configuration µ includes (or collides with, matches) the point 3000. An index n^{µ}_{CRB} of the common resource block for a certain subcarrier spacing configuration µ satisfies a relationship of n^{µ}_{CRB} = ceil(k_{sc}/N^{RB}_{sc}). Here, a subcarrier with k_{sc} = 0 is a subcarrier having the same center frequency as the center frequency of a subcarrier corresponding to the point 3000.

Physical resource blocks for a certain subcarrier spacing configuration µ are assigned indices in ascending order from 0 in the frequency domain in a certain BWP. An index n^{µ}_{PRB} of the physical resource block for a certain subcarrier spacing configuration µ satisfies a relationship of n^{µ}_{CRB} = n^{µ}_{PRB} + N^{start, µ}_{BWP, i}. Here, N^{start, µ}_{BWP, i} indicates a reference point of the BWP having an index of i.

The BWP is defined as a subset of common resource blocks included in the resource grid. The BWP includes N^{size,µ}_{BWP, i} common resource blocks starting from the reference point N^{start, µ}_{BWP, i} of the BWP. The BWP configured for the downlink carrier is also referred to as a downlink BWP. The BWP configured for the uplink component carrier is also referred to as an uplink BWP.

An antenna port may be (is) defined such that the channel over which a symbol on the antenna port is conveyed can be inferred from the channel over which another symbol on the same antenna port is conveyed. For example, the channel may correspond to a physical channel. The symbol may correspond to an OFDM symbol. The symbol may also correspond to the resource block unit. The symbol may correspond to the resource element.

The fact that a large scale property of a channel over which a symbol on one antenna port is conveyed can be inferred from a channel over which a symbol on another antenna port is conveyed is referred to as the two antenna ports are Quasi Co-Located (QCL). Here, the large scale property may include at least long term performance of a channel. The large scale property may include at least a part or all of delay spread, Doppler spread, Doppler shift, an average gain, an average delay, and a beam parameter (spatial Rx parameters). The fact that the first antenna port and the second antenna port are QCL with respect to a beam parameter may mean that a reception beam assumed by a receiver side for the first antenna port and a reception beam assumed by the receiver side for the second antenna port are the same (or the reception beams correspond to each other). The fact that the first antenna port and the second antenna port are QCL with respect to a beam parameter may mean that a transmission beam assumed by a receiver side for the first antenna port and a transmission beam assumed by the receiver side for the second antenna port are the same (or the transmission beams correspond to each other). In a case that the large scale property of a channel over which a symbol on one antenna port is conveyed can be inferred from a channel over which a symbol on another antenna port is conveyed, the terminal apparatus 1 may assume that the two antenna ports are QCL. The fact that two antenna ports are QCL may mean that the two antenna ports are assumed to be QCL.

Carrier aggregation may mean that communication is performed by using multiple serving cells being aggregated. Carrier aggregation may mean that communication is performed by using multiple component carriers being aggregated. Carrier aggregation may mean that communication is performed by using multiple downlink component carriers being aggregated. Carrier aggregation may mean that communication is performed by using multiple uplink component carriers being aggregated.

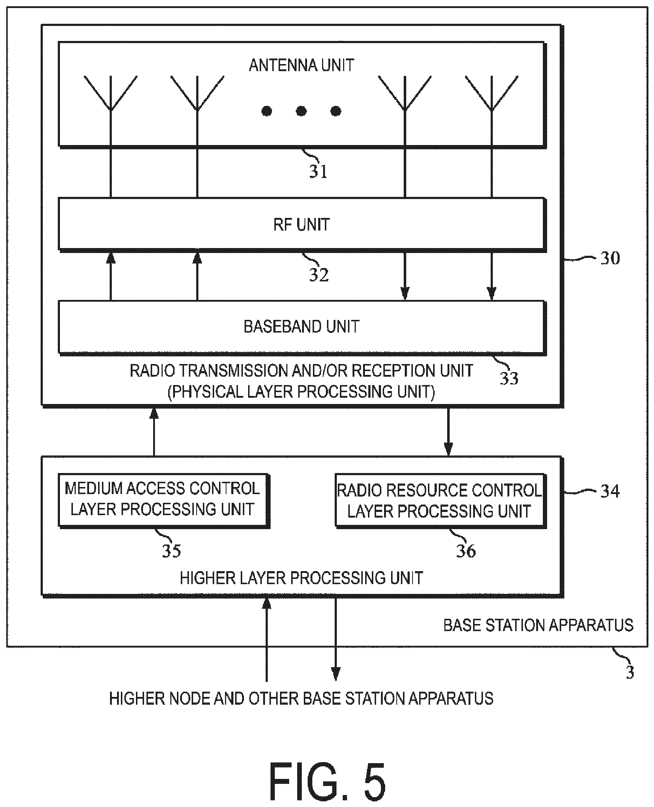

FIG. 5 is a schematic block diagram illustrating a configuration example of the base station apparatus 3 according to an aspect of the present embodiment. As illustrated in FIG. 5, the base station apparatus 3 includes at least a part or all of a radio transmission and/or reception unit (physical layer processing unit) 30 and/or a Higher layer processing unit 34. The radio transmission and/or reception unit 30 includes at least a part or all of an antenna unit 31, a Radio Frequency (RF) unit 32, and a baseband unit 33. The higher layer processing unit 34 includes at least a part or all of a medium access control layer processing unit 35 and a Radio Resource Control (RRC) layer processing unit 36.

The radio transmission and/or reception unit 30 includes at least a part or all of a radio transmission unit 30a and a radio reception unit 30b. Here, apparatus configurations of the baseband unit included in the radio transmission unit 30a and the baseband unit included in the radio reception unit 30b may be the same or different from each other. Apparatus configurations of the RF unit included in the radio transmission unit 30a and the RF unit included in the radio reception unit 30b may be the same or different from each other. Apparatus configurations of the antenna unit included in the radio transmission unit 30a and the antenna unit included in the radio reception unit 30b may be the same or different from each other.

For example, the radio transmission unit 30a may generate and transmit a baseband signal of the PDSCH. For example, the radio transmission unit 30a may generate and transmit a baseband signal of the PDCCH. For example, the radio transmission unit 30a may generate and transmit a baseband signal of the PBCH. For example, the radio transmission unit 30a may generate and transmit a baseband signal of a synchronization signal. For example, the radio transmission unit 30a may generate and transmit a baseband signal of the PDSCH DMRS. For example, the radio transmission unit 30a may generate and transmit a baseband signal of the PDCCH DMRS. For example, the radio transmission unit 30a may generate and transmit a baseband signal of the CSI-RS. For example, the radio transmission unit 30a may generate and transmit a baseband signal of the DL PTRS.

For example, the radio reception unit 30b may receive the PRACH. For example, the radio reception unit 30b may receive and demodulate the PUCCH. The radio reception unit 30b may receive and demodulate the PUSCH. For example, the radio reception unit 30b may receive the PUCCH DMRS. For example, the radio reception unit 30b may receive the PUSCH DMRS. For example, the radio reception unit 30b may receive the UL PTRS. For example, the radio reception unit 30b may receive the SRS.

The higher layer processing unit 34 outputs downlink data (a transport block) to the radio transmission and/or reception unit 30 (or the radio transmission unit 30a). The higher layer processing unit 34 performs processing operations of a Medium Access Control (MAC) layer, a Packet Data Convergence Protocol (PDCP) layer, a Radio Link Control (RLC) layer, and an RRC layer.

The medium access control layer processing unit 35 included in the higher layer processing unit 34 performs processing of the MAC layer. A processing operation of the MAC layer may be a processing operation of a MAC entity.

The radio resource control layer processing unit 36 included in the higher layer processing unit 34 performs processing of the RRC layer. The radio resource control layer processing unit 36 manages various pieces of configuration information/parameters (RRC parameters) of the terminal apparatus 1. The radio resource control layer processing unit 36 sets the parameter based on an RRC message received from the terminal apparatus 1.

The radio transmission and/or reception unit 30 (or the radio transmission unit 30a) performs processing such as modulation and encoding. The radio transmission and/or reception unit 30 (or the radio transmission unit 30a) generates a physical signal through modulation, encoding, and baseband signal generation (conversion into the time-continuous signal) on the downlink data, and transmits the physical signal to the terminal apparatus 1. The radio transmission and/or reception unit 30 (or the radio transmission unit 30a) may map the physical signal to a certain component carrier and transmit the physical signal to the terminal apparatus 1.

The radio transmission and/or reception unit 30 (or the radio reception unit 30b) performs processing such as demodulation and decoding. The radio transmission and/or reception unit 30 (or the radio reception unit 30b) separates, demodulates, and decodes the received physical signal, and outputs the decoded information to the higher layer processing unit 34. The radio transmission and/or reception unit 30 (or the radio reception unit 30b) may perform a channel access procedure prior to transmission of the physical signal.

The RF unit 32 converts (down converts) a signal received via the antenna unit 31 into a baseband signal by means of quadrature demodulation and removes unnecessary frequency components. The RF unit 32 outputs a processed analog signal to the baseband unit.

The baseband unit 33 converts an analog signal input from the RF unit 32 into a digital signal. The baseband unit 33 removes a portion corresponding to a Cyclic Prefix (CP) from the converted digital signal, performs a Fast Fourier Transform (FFT) on the signal from which the CP has been removed, and extracts a signal in the frequency domain.

The baseband unit 33 performs Inverse Fast Fourier Transform (IFFT) on the data to generate an OFDM symbol, adds a CP to the generated OFDM symbol, generates a baseband digital signal, and converts the baseband digital signal into an analog signal. The baseband unit 33 outputs the converted analog signal to the RF unit 32.

The RF unit 32 removes an unnecessary frequency component from the analog signal input from the baseband unit 33 by using a low-pass filter, upconverts the analog signal into a signal having a carrier frequency, and transmits the signal via the antenna unit 31. The RF unit 32 may have a function of controlling transmission power. The RF unit 32 is also referred to as a transmission power control unit.

For the terminal apparatus 1, one or multiple serving cells (or component carriers, downlink component carriers, uplink component carriers) may be configured.

Each of the serving cells configured for the terminal apparatus 1 may be one of a Primary cell (PCell), a Primary SCG cell (PSCell), or a Secondary Cell (SCell). An SpCell may be one or both of a PCell and a PSCell.

The PCell is a serving cell included in a Master Cell Group (MCG). The PCell is a cell in which an initial connection establishment procedure or a connection re-establishment procedure is performed (has been performed) by the terminal apparatus 1.

The PSCell is a serving cell included in a Secondary Cell Group (SCG). The PSCell is a serving cell in which random access is performed by the terminal apparatus 1.

The SCell may be included in either of the MCG or the SCG.

A serving cell group (cell group) is a term at least including an MCG and an SCG. The serving cell group may include one or multiple serving cells (or component carriers). One or multiple serving cells (or component carriers) included in the serving cell group may be operated by means of carrier aggregation.

One or multiple downlink BWPs may be configured for each of the serving cells (or downlink component carriers). One or multiple uplink BWPs may be configured for each of the serving cells (or uplink component carriers).

Among one or multiple downlink BWPs configured for the serving cell (or the downlink component carrier), one downlink BWP may be configured as an active downlink BWP (or one downlink BWP may be activated). Among one or multiple uplink BWPs configured for the serving cell (or the uplink component carrier), one uplink BWP may be configured as an active uplink BWP (or one uplink BWP may be activated).

The PDSCH, the PDCCH, and the CSI-RS may be received in the active downlink BWP. The terminal apparatus 1 may attempt to receive the PDSCH, the PDCCH, and the CSI-RS in the active downlink BWP. The PUCCH and the PUSCH may be transmitted in the active uplink BWP. The terminal apparatus 1 may transmit the PUCCH and the PUSCH in the active uplink BWP. The active downlink BWP and the active uplink BWP are also collectively referred to as an active BWP.

The PDSCH, the PDCCH, and the CSI-RS need not be received in downlink BWPs (inactive downlink BWPs) other than the active downlink BWP. The terminal apparatus 1 need not attempt to receive the PDSCH, the PDCCH, and the CSI-RS in downlink BWPs that are not the active downlink BWP. The PUCCH and the PUSCH need not be transmitted in uplink BWPs (inactive uplink BWPs) that are not the active uplink BWP. The terminal apparatus 1 need not transmit the PUCCH and the PUSCH in uplink BWPs that are not the active uplink BWP. The inactive downlink BWP and the inactive uplink BWP are also collectively referred to as an inactive BWP.

Downlink BWP switch is a procedure for deactivating one active downlink BWP of a certain serving cell and activating any one of the inactive downlink BWPs of the certain serving cell. The downlink BWP switch may be controlled by a BWP field included in downlink control information. The downlink BWP switch may be controlled based on a higher layer parameter.

Uplink BWP switch is used for deactivating one active uplink BWP and activating any one of the inactive uplink BWPs that are not the one active uplink BWP. The uplink BWP switch may be controlled by a BWP field included in downlink control information. The uplink BWP switch may be controlled based on a higher layer parameter.

Among one or multiple downlink BWPs configured for the serving cell, two or more downlink BWPs need not be configured for the active downlink BWP. For the serving cell, at certain times, one downlink BWP may be active.

Among one or multiple uplink BWPs configured for the serving cell, two or more uplink BWPs need not be configured for the active uplink BWP. For the serving cell, at certain times, one uplink BWP may be active.

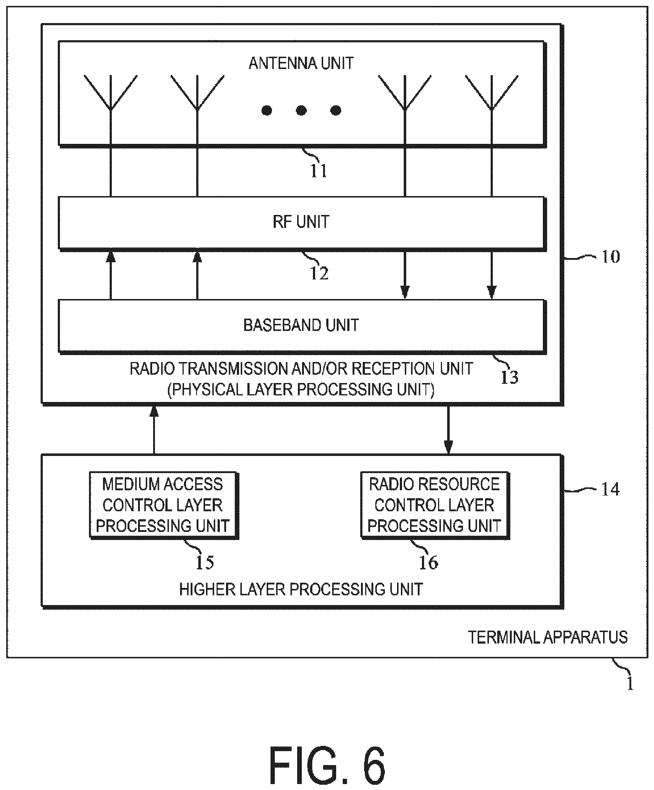

FIG. 6 is a schematic block diagram illustrating a configuration example of the terminal apparatus 1 according to an aspect of the present embodiment. As illustrated in FIG. 6, the terminal apparatus 1 includes at least one or all of a radio transmission and/or reception unit (physical layer processing unit) 10 and a higher layer processing unit 14. The radio transmission and/or reception unit 10 includes at least a part or all of an antenna unit 11, an RF unit 12, and a baseband unit 13. The higher layer processing unit 14 includes at least a part or all of a medium access control layer processing unit 15 and a radio resource control layer processing unit 16.

The radio transmission and/or reception unit 10 includes at least a part or all of a radio transmission unit 10a and a radio reception unit 10b. Here, apparatus configurations of the baseband unit 13 included in the radio transmission unit 10a and the baseband unit 13 included in the radio reception unit 10b may be the same or different from each other. Apparatus configurations of the RF unit 12 included in the radio transmission unit 10a and the RF unit 12 included in the radio reception unit 10b may be the same or different from each other. Apparatus configurations of the antenna unit 11 included in the radio transmission unit 10a and the antenna unit 11 included in the radio reception unit 10b may be the same or different from each other.

For example, the radio transmission unit 10a may generate and transmit a baseband signal of the PRACH. For example, the radio transmission unit 10a may generate and transmit a baseband signal of the PUCCH. The radio transmission unit 10a may generate and transmit a baseband signal of the PUSCH. For example, the radio transmission unit 10a may generate and transmit a baseband signal of the PUCCH DMRS. For example, the radio transmission unit 10a may generate and transmit a baseband signal of the PUSCH DMRS. For example, the radio transmission unit 10a may generate and transmit a baseband signal of the UL PTRS. For example, the radio transmission unit 10a may generate and transmit a baseband signal of the SRS. Generating the baseband signal of the SRS may be generating an SRS sequence.

For example, the radio reception unit 10b may receive and demodulate the PDSCH. For example, the radio reception unit 10b may receive and demodulate the PDCCH. For example, the radio reception unit 10b may receive and demodulate the PBCH. For example, the radio reception unit 10b may receive the synchronization signal. For example, the radio reception unit 10b may receive the PDSCH DMRS. For example, the radio reception unit 10b may receive the PDCCH DMRS. For example, the radio reception unit 10b may receive the CSI-RS. For example, the radio reception unit 10b may receive the DL PTRS.

The higher layer processing unit 14 outputs uplink data (a transport block) to the radio transmission and/or reception unit 10 (or the radio transmission unit 10a). The higher layer processing unit 14 performs processing operations of the MAC layer, a packet data convergence protocol layer, a radio link control layer, and the RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various pieces of configuration information/parameters (RRC parameters) of the terminal apparatus 1. The radio resource control layer processing unit 16 sets the RRC parameters based on an RRC message received from the base station apparatus 3.

The radio transmission and/or reception unit 10 (or the radio transmission unit 10a) performs processing such as modulation and encoding. The radio transmission and/or reception unit 10 (or the radio transmission unit 10a) generates a physical signal through modulation, encoding, and baseband signal generation (conversion into the time-continuous signal) on the uplink data and transmits the physical signal to the base station apparatus 3. The radio transmission and/or reception unit 10 (or the radio transmission unit 10a) may map the physical signal to a certain BWP (an active uplink BWP) and transmit the physical signal to the base station apparatus 3.

The radio transmission and/or reception unit 10 (or the radio reception unit 10b) performs processing such as demodulation and decoding. The radio transmission and/or reception unit 10 (or the radio reception unit 30b) may receive a physical signal in a certain BWP (active downlink BWP) of a certain serving cell. The radio transmission and/or reception unit 10 (or the radio reception unit 10b) separates, demodulates, and decodes the received physical signal and outputs the decoded information to the higher layer processing unit 14. The radio transmission and/or reception unit 10 (radio reception unit 10b) may perform the channel access procedure prior to the transmission of the physical signal.

The RF unit 12 converts (down converts) a signal received via the antenna unit 11 into a baseband signal by means of quadrature demodulation and removes unnecessary frequency components. The RF unit 12 outputs a processed analog signal to the baseband unit 13.

The baseband unit 13 converts the analog signal input from the RF unit 12 into a digital signal. The baseband unit 13 removes a portion corresponding to a Cyclic Prefix (CP) from the converted digital signal, performs a Fast Fourier Transform (FFT) on the signal from which the CP has been removed, and extracts a signal in the frequency domain.

The baseband unit 13 performs Inverse Fast Fourier Transform (IFFT) on the uplink data to generate an OFDM symbol, adds a CP to the generated OFDM symbol, generates a baseband digital signal, and converts the baseband digital signal into an analog signal. The baseband unit 13 outputs the converted analog signal to the RF unit 12.

The RF unit 12 removes unnecessary frequency components from the analog signal input from the baseband unit 13 through a low-pass filter, upconverts the analog signal into a signal having a carrier frequency, and transmits the signal via the antenna unit 11. The RF unit 12 may have a function of controlling transmission power. The RF unit 12 is also referred to as a transmit power control unit.

The physical signal (signal) will be described below.

The physical signal is a general term for a downlink physical channel, a downlink physical signal, an uplink physical channel, and an uplink physical channel. The physical channel is a general term for a downlink physical channel and an uplink physical channel. The physical signal is a general term for a downlink physical signal and an uplink physical signal.

The uplink physical channel may correspond to a set of resource elements for conveying information that is generated in a Higher layer. The uplink physical channel may be a physical channel used in the uplink component carrier. The uplink physical channel may be transmitted by the terminal apparatus 1. The uplink physical channel may be received by the base station apparatus 3. In the radio communication system according to an aspect of the present embodiment, at least a part or all of the following uplink physical channels may be used.
- Physical Uplink Control CHannel (PUCCH)
- Physical Uplink Shared CHannel (PUSCH)
- Physical Random Access CHannel (PRACH)

The PUCCH may be used to transmit Uplink Control Information (UCI). The PUCCH may be transmitted for conveying (delivering, transmitting) the uplink control information. The uplink control information may be mapped to the PUCCH. The terminal apparatus 1 may transmit the PUCCH to which the uplink control information is mapped. The base station apparatus 3 may receive the PUCCH to which the uplink control information is mapped.

The uplink control information (uplink control information bit, uplink control information sequence, uplink control information type) includes at least a part or all of Channel State Information (CSI), a Scheduling Request (SR), and Hybrid Automatic Repeat request ACKnowledgement (HARQ-ACK) information.

The channel state information is also referred to as a channel state information bit or a channel state information sequence. The scheduling request is also referred to as a scheduling request bit or a scheduling request sequence. The HARQ-ACK information is also referred to as a HARQ-ACK information bit or a HARQ-ACK information sequence.

The HARQ-ACK information may include at least a HARQ-ACK bit corresponding to a Transport block (TB). The HARQ-ACK may indicate an acknowledgement (ACK) or a negative-acknowledgement (NACK) corresponding to the transport block. The ACK may indicate that decoding of the transport block has been decoded successfully. The NACK may indicate that decoding of the transport block has not been decoded successfully. The HARQ-ACK information may include a HARQ-ACK codebook including one or multiple HARQ-ACK bits.

The transport block is a sequence of information bits delivered from a higher layer. Here, the sequence of information bits is also referred to as a bit sequence. Here, the transport block may be delivered through an UpLink - Shared CHannel (UL-SCH) of a Transport layer.

A HARQ-ACK for the transport block may be referred to as a HARQ-ACK for the PDSCH. The "HARQ-ACK for the PDSCH" indicates the HARQ-ACK for the transport block included in the PDSCH.

The HARQ-ACK may indicate an ACK or a NACK corresponding to one Code Block Group (CBG) included in the transport block.

The scheduling request may be at least used for requesting a resource of the UL-SCH for new transmission. The scheduling request bit may be used for indicating either of a positive SR or a negative SR. The scheduling request bit indicating the positive SR is also referred to as "the positive SR being conveyed". The positive SR may indicate that the terminal apparatus 1 requests resources of the UL-SCH for initial transmission. The positive SR may indicate that a scheduling request is triggered by a higher layer. The positive SR may be conveyed in a case that the higher layer indicates the scheduling request. The scheduling request bit indicating the negative SR is also referred to as "the negative SR being transmitted". The negative SR may indicate that the terminal apparatus 1 requests no resources of the UL-SCH for initial transmission. The negative SR may indicate that the scheduling request is not triggered by the higher layer. The negative SR may be conveyed in a case that the higher layer indicates no scheduling request.

Channel state information may include at least a part or all of a Channel Quality Indicator (CQI), a Precoder Matrix Indicator (PMI), and a Rank Indicator (RI). The CQI is an indicator related to quality (for example, propagation strength) of a propagation path or quality of a physical channel, and the PMI is an indicator related to a precoder. The RI is an indicator related to a transmission rank (or the number of transmission layers).

The channel state information is an indicator related to a reception state of a physical signal (for example, CSI-RS) at least used for channel measurement. The channel state information may be determined by the terminal apparatus 1 based on the reception state assumed by the physical signal at least used for channel measurement. Channel measurement may include interference measurement.

The PUCCH may correspond to a PUCCH format. The PUCCH may be a set of resource elements used for conveying the PUCCH format. The PUCCH may include the PUCCH format. The PUCCH format may be transmitted with a certain PUCCH format. Note that the PUCCH format may be interpreted as a form of information. The PUCCH format may be interpreted as a set of information set to a certain form of information.

The PUSCH may be used for conveying one or both of the transport block and the uplink control information. The transport block may be mapped to the PUSCH. The transport block delivered by the UL-SCH may be mapped to the PUSCH. The uplink control information may be mapped to the PUSCH. The terminal apparatus 1 may transmit the PUSCH to which one or both of the transport block and the uplink control information are mapped. The base station apparatus 3 may receive the PUSCH to which one or both of the transport block and the uplink control information are mapped.

The PRACH may be transmitted for conveying a random access preamble. The terminal apparatus 1 may transmit the PRACH. The base station apparatus 3 may receive the PRACH. A PRACH sequence xᵤ, ᵥ(n) is defined by xᵤ, ᵥ(n) = xᵤ(mod(n + Cᵥ, L_{RA})). Here, xᵤ is a Zadoff Chu (ZC) sequence. xᵤ may be defined by xᵤ = exp(-jπui(i + 1)/L_{RA}). j is an imaginary unit. π is ratio of the circumference of a circle to its diameter. Cᵥ corresponds to a cyclic shift of the PRACH sequence. L_{RA} corresponds to the length of the PRACH sequence. L_{RA} is 839, or 139. i is an integer in the range from 0 to L_{RA} - 1. u is a sequence index for the PRACH sequence.

For each PRACH occasion, 64 random access preambles are defined. The random access preambles are identified based on the cyclic shift Cᵥ of the PRACH sequence and the sequence index u for the PRACH sequence. Each of the 64 identified random access preambles may be assigned an index.

The uplink physical signal may correspond to a set of resource elements. The uplink physical signal need not be used to convey information generated in a higher layer. Note that the uplink physical signal may be used to convey information generated in a physical layer. The uplink physical signal may be a physical signal used in the uplink component carrier. The terminal apparatus 1 may transmit the uplink physical signal. The base station apparatus 3 may receive the uplink physical signal. In the radio communication system according to an aspect of the present embodiment, at least a part or all of the following uplink physical signals may be used.
- UpLink Demodulation Reference Signal (UL DMRS)
- Sounding Reference Signal (SRS)
- UpLink Phase Tracking Reference Signal (UL PTRS)

The UL DMRS is a general term for a DMRS for the PUSCH and a DMRS for the PUCCH.

A set of antenna ports of the DMRS for the PUSCH (DMRS related to the PUSCH, DMRS included in the PUSCH, DMRS corresponding to the PUSCH) may be given based on a set of antenna ports for the PUSCH. For example, the set of antenna ports of the DMRS for the PUSCH may be the same as a set of antenna ports of the PUSCH.

Transmission of the PUSCH and transmission of the DMRS for the PUSCH may be indicated (or may be scheduled) by one DCI format. The PUSCH and the DMRS for the PUSCH may be collectively referred to as a PUSCH. Transmission of the PUSCH may mean transmission of the PUSCH and the DMRS for the PUSCH.

A propagation path of the PUSCH may be inferred from the DMRS for the PUSCH.

A set of antenna ports of the DMRS for the PUCCH (DMRS related to the PUCCH, DMRS included in the PUCCH, DMRS corresponding to the PUCCH) may be the same as a set of antenna ports of the PUCCH.

Transmission of the PUCCH and transmission of the DMRS for the PUCCH may be indicated (or may be triggered) by one DCI format. One or both of resource element mapping of the PUCCH and resource element mapping of the DMRS for the PUCCH may be given by one PUCCH format. The PUCCH and the DMRS for the PUCCH may be collectively referred to as a PUCCH. Transmission of the PUCCH may mean transmission of the PUCCH and the DMRS for the PUCCH.

A propagation path of the PUCCH may be inferred from the DMRS for the PUCCH.

The downlink physical channel may correspond to a set of resource elements for conveying information generated in a higher layer. The downlink physical channel may be a physical channel used in a downlink component carrier. The base station apparatus 3 may transmit the downlink physical channel. The terminal apparatus 1 may receive the downlink physical channel. In the radio communication system according to an aspect of the present embodiment, at least a part or all of the following downlink physical channels may be used.
- Physical Broadcast Channel (PBCH)
- Physical Downlink Control Channel (PDCCH)
- Physical Downlink Shared Channel (PDSCH)

The PBCH may be transmitted for conveying one or both of a Master Information Block (MIB) and physical layer control information. Here, the physical layer control information is information generated in the physical layer. The MIB is a set of parameters mapped to a Broadcast Control CHannel (BCCH) that is a logical channel of the MAC layer. The BCCH is mapped to the BCH that is a channel of the transport layer. The BCH may be mapped to the PBCH. The terminal apparatus 1 may receive the PBCH to which one or both of the MIB and the physical layer control information are mapped. The base station apparatus 3 may transmit the PBCH to which one or both of the MIB and/or the physical layer control information are mapped.

For example, the physical layer control information may include 8 bits. The physical layer control information may include at least a part or all of the following 0A to 0D.
0A) Radio frame bit
0B) Half radio frame (half system frame, half frame) bit
0C) SS/PBCH block index bit 0D) Subcarrier offset bit

The radio frame bit is used for indicating a radio frame in which the PBCH is transmitted (radio frame including a slot in which the PBCH is transmitted). The radio frame bit includes 4 bits. The radio frame bit may include 4 bits out of a 10-bit radio frame indicator. For example, the radio frame indicator may be at least used for identifying radio frames from index 0 to index 1023.

The half radio frame bit is used for indicating, out of the radio frame in which the PBCH is transmitted, which of the first five subframes or the last five subframes is used for transmission of the PBCH. Here, the half radio frame may include five subframes. The half radio frame may include the first five subframes out of the 10 subframes included in the radio frame. The half radio frame may include the last five subframes out of the 10 subframes included in the radio frame.

The SS/PBCH block index bit is used for indicating an SS/PBCH block index. The SS/PBCH block index bit includes 3 bits. The SS/PBCH block index bit may include 3 bits out of a 6-bit SS/PBCH block index indicator. The SS/PBCH block index indicator may be at least used for identifying SS/PBCH blocks from index 0 to index 63. The SS/PBCH block may be also referred to as an SSB.

The subcarrier offset bit is used for indicating a subcarrier offset. The subcarrier offset may be used for indicating a difference between the first subcarrier to which the PBCH is mapped and the first subcarrier to which the control resource set having an index of 0 is mapped.

The PDCCH may be used for transmitting Downlink Control Information (DCI). The downlink control information may be mapped to the PDCCH. The terminal apparatus 1 may receive the PDCCH to which the downlink control information is mapped. The base station apparatus 3 may transmit the PDCCH to which the downlink control information is mapped.

The downlink control information may be transmitted with a DCI format. Note that the DCI format may also be interpreted to be in the format of downlink control information. The DCI format may be interpreted as a set of downlink control information set to a certain format of downlink control information.

A DCI format 0_0, a DCI format 0_1, a DCI format 1_0, and a DCI format 1_1 are DCI formats. An uplink DCI format is a general term for the DCI format 0_0 and the DCI format 0_1. A downlink DCI format is a general term for the DCI format 1_0 and the DCI format 1_1.

The DCI format 0_0 is at least used for scheduling of the PUSCH mapped to a certain cell. The DCI format 0_0 includes at least a part or all of fields listed from 1A to 1E.
1A) Identifier field for DCI formats
1B) Frequency domain resource assignment field
1C) Time domain resource assignment field
1D) Frequency hopping flag field
1E) Modulation and Coding Scheme (MCS) field

The identifier field for DCI formats may indicate whether the DCI format including the identifier field for DCI formats is an uplink DCI format or a downlink DCI format. In other words, each of the uplink DCI format and the downlink DCI format may include the identifier field for DCI formats. Here, the identifier field for DCI formats included in the DCI format 0_0 may indicate 0.

A frequency domain resource assignment field included in the DCI format 0_0 may be used for indicating assignment of frequency resources for the PUSCH.

A time domain resource assignment field included in the DCI format 0_0 may be used for indicating assignment of time resources for the PUSCH.

A frequency hopping flag field may be used for indicating whether frequency hopping is applied to the PUSCH.

An MCS field included in the DCI format 0_0 may be at least used for indicating one or both of a modulation scheme for the PUSCH and a target encoding rate. The target encoding rate may be a target encoding rate for the transport block mapped to the PUSCH. The Transport Block Size (TBS) of the PUSCH mapped to the PUSCH may be determined based on one or both of the target encoding rate and the modulation scheme for the PUSCH.

The DCI format 0_0 need not include a field used for a CSI request.

The DCI format 0_0 need not include a carrier indicator field. In other words, for the uplink component carrier to which the PUSCH scheduled by the DCI format 0_0 is mapped, the serving cell to which this uplink component carrier belongs may be the same as the serving cell of the uplink component carrier to which the PDCCH including the DCI format 0_0 is mapped. Based on detection of the DCI format 0_0 in a certain downlink component carrier of a certain serving cell, the terminal apparatus 1 may recognize that the PUSCH scheduled by the DCI format 0_0 is mapped to the uplink component carrier of the certain serving cell.

The DCI format 0_0 need not include the BWP field. Here, the DCI format 0_0 may be a DCI format for scheduling the PUSCH without changing the active uplink BWP. The terminal apparatus 1 may recognize that the PUSCH is transmitted without switching the active uplink BWP based on detection of the DCI format 0_0 used for the scheduling of the PUSCH.

The DCI format 0_1 is at least used for scheduling of the PUSCH of a certain cell (mapped to a certain cell). The DCI format 0_1 includes at least a part or all of fields listed from 2A to 2H.
2A) Identifier field for DCI formats
2B) Frequency domain resource assignment field
2C) Uplink time domain resource assignment field
2D) Frequency hopping flag field
2E) MCS field
2F) CSI request field
2G) BWP field
2H) Carrier indicator field

The identifier field for DCI formats included in the DCI format 0_1 may indicate 0.

The frequency domain resource assignment field included in the DCI format 0_1 may be used for indicating assignment of frequency resources for the PUSCH.

The time domain resource assignment field included in the DCI format 0_1 may be used for indicating assignment of time resources for the PUSCH.

The MCS field included in the DCI format 0_1 may be at least used for indicating a part or all of a modulation scheme for the PUSCH and/or a target encoding rate.

The BWP field of the DCI format 0_1 may be used for indicating an uplink BWP to which the PUSCH scheduled by the DCI format 0_1 is mapped. In other words, the DCI format 0_1 may be accompanied by a change in the active uplink BWP. The terminal apparatus 1 may recognize the uplink BWP to which the PUSCH is mapped based on detection of the DCI format 0_1 used for scheduling of the PUSCH.

The DCI format 0_1 not including the BWP field may be a DCI format for scheduling the PUSCH without changing the active uplink BWP. The terminal apparatus 1 may recognize that the PUSCH is transmitted without switching the active uplink BWP based on detection of the DCI format D0_1 which is the DCI format 0_1 used for the scheduling of the PUSCH and does not include the BWP field.

In a case that the BWP field is included in the DCI format 0_1 but the terminal apparatus 1 does not support the function of switching the BWP according to the DCI format 0_1, the terminal apparatus 1 may ignore the BWP field. In other words, the terminal apparatus 1 which does not support the function of switching the BWP may recognize that the PUSCH is transmitted without switching the active uplink BWP based on detection of the DCI format 0_1 which is the DCI format 0_1 used for the scheduling of the PUSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

The CSI request field is used for indicating the report of the CSI.

In a case that the carrier indicator field is included in the DCI format 0_1, the carrier indicator field may be used for indicating the uplink component carrier to which the PUSCH is mapped. In a case that the carrier indicator field is not included in the DCI format 0_1, the uplink component carrier to which the PUSCH is mapped may be the same as the uplink component carrier to which the PDCCH including the DCI format 0_1 used for scheduling of the PUSCH is mapped. In a case that the number of uplink component carriers configured for the terminal apparatus 1 in a certain serving cell group is two or more (case that uplink carrier aggregation is operated in a certain serving cell group), the number of bits of the carrier indicator field included in the DCI format 0_1 used for scheduling of the PUSCH mapped to the certain serving cell group may be 1 bit or more (for example, 3 bits). In a case that the number of uplink component carriers configured for the terminal apparatus 1 in a certain serving cell group is one (case that uplink carrier aggregation is not operated in a certain serving cell group), the number of bits of the carrier indicator field included in the DCI format 0_1 used for scheduling of the PUSCH mapped to the certain serving cell group may be 0 bits (or the carrier indicator field need not be included in the DCI format 0_1 used for scheduling of the PUSCH mapped to the certain serving cell group).

The DCI format 1_0 is at least used for scheduling of the PDSCH mapped to a certain cell. The DCI format 1_0 includes at least a part or all of 3A to 3F.
3A) Identifier field for DCI formats
3B) Frequency domain resource assignment field
3C) Time domain resource assignment field
3D) MCS field
3E) PDSCH_HARQ feedback timing indicator field (PDSCH to HARQ feedback timing indicator field)
3F) PUCCH resource indicator field

The identifier field for DCI formats included in the DCI format 1_0 may indicate 1.

The frequency domain resource assignment field included in the DCI format 1_0 may be at least used for indicating assignment of frequency resources for the PDSCH.

The time domain resource assignment field included in the DCI format 1_0 may be at least used for indicating assignment of time resources for the PDSCH.

The MCS field included in the DCI format 1_0 may be at least used for indicating one or both of the modulation scheme for the PDSCH and the target encoding rate. The target encoding rate may be a target encoding rate for the transport block mapped to the PDSCH. The Transport Block Size (TBS) of the PDSCH mapped to the PDSCH may be determined based on one or both of the target encoding rate and the modulation scheme for the PDSCH.

The PDSCH_HARQ feedback timing indicator field may be used for indicating an offset from the slot including the last OFDM symbol of the PDSCH to the slot including the first OFDM symbol of the PUCCH.

The PUCCH resource indicator field may be a field indicating an index of any of one or multiple PUCCH resources included in a PUCCH resource set. The PUCCH resource set may include one or multiple PUCCH resources.

The DCI format 1_0 need not include the carrier indicator field. In other words, the downlink component carrier to which the PDSCH scheduled by using a DCI format 1_0 is mapped may be the same as the downlink component carrier to which the PDCCH including the DCI format 1_0 is mapped. Based on detection of the DCI format 1_0 in a certain downlink component carrier, the terminal apparatus 1 may recognize that the PDSCH scheduled by the DCI format 1_0 is mapped to the downlink component carrier.

The DCI format 1_0 need not include the BWP field. Here, DCI format 1_0 may be a DCI format for scheduling the PDSCH without changing the active downlink BWP. The terminal apparatus 1 may recognize that the PDSCH is received without switching the active downlink BWP based on detection of the DCI format 1_0 used in the scheduling of the PDSCH.

The DCI format 1_1 is at least used for scheduling of the PDSCH mapped to a certain cell. The DCI format 1_1 includes at least a part or all of 4A to 4I.
4A) Identifier field for DCI formats
4B) Frequency domain resource assignment field
4C) Time domain resource assignment field
4E) MCS field
4F) PDSCH_HARQ feedback timing indicator field
4G) PUCCH resource indicator field
4H) BWP field
4I) Carrier indicator field

The identifier field for DCI formats included in the DCI format 1_1 may indicate 1.

The frequency domain resource assignment field included in the DCI format 1_1 may be at least used for indicating assignment of frequency resources for the PDSCH.

The time domain resource assignment field included in the DCI format 1_1 may be at least used for indicating assignment of time resources for the PDSCH.

The MCS field included in the DCI format 1_1 may be at least used for indicating one or both of the modulation scheme for the PDSCH and the target encoding rate.

In a case that the PDSCH_HARQ feedback timing indicator field is included in the DCI format 1_1, the PDSCH_HARQ feedback timing indicator field may be at least used for indicating an offset from the slot including the last OFDM symbol of the PDSCH to the slot including the first OFDM symbol of the PUCCH. In a case that the PDSCH_HARQ feedback timing indicator field is not included in the DCI format 1_1, an offset from the slot including the last OFDM symbol of the PDSCH to the slot including the first OFDM symbol of the PUCCH may be identified by a higher layer parameter.

The PUCCH resource indicator field may be a field indicating an index of any of one or multiple PUCCH resources included in a PUCCH resource set.

The BWP field of the DCI format 1_1 may be used to indicate the downlink BWP to which the PDSCH scheduled by the DCI format 1_1 is mapped. In other words, the DCI format 1_1 may be accompanied by a change in the active downlink BWP. The terminal apparatus 1 may recognize the downlink BWP to which the PUSCH is mapped based on detection of the DCI format 1_1 used for the scheduling of the PDSCH.

The DCI format 1_1 not including the BWP field may be a DCI format for scheduling the PDSCH without changing the active downlink BWP. The terminal apparatus 1 may recognize that the PDSCH is received without switching the active downlink BWP based on detection of the DCI format 1_1 which is used for the scheduling of the PDSCH and does not include the BWP field.

In a case that the DCI format 1_1 includes the BWP field but the terminal apparatus 1 does not support the function of switching the BWP according to the DCI format 1_1, the terminal apparatus 1 may ignore the BWP field. In other words, the terminal apparatus 1 which does not support the function of switching the BWP may recognize that the PDSCH is received without switching the active downlink BWP based on detection of the DCI format 1_1 which is used for the scheduling of the PDSCH and includes the BWP field. Here, in a case of supporting the function of switching the BWP, the terminal apparatus 1 may report, in a function information reporting procedure of the RRC layer, that "the terminal apparatus 1 supports the function of switching the BWP".

In a case that the carrier indicator field is included in the DCI format 1_1, the carrier indicator field may be used for indicating the downlink component carrier to which the PDSCH is mapped. In a case that the carrier indicator field is not included in the DCI format 1_1, the downlink component carrier to which the PDSCH is mapped may be the same as the downlink component carrier to which the PDCCH including the DCI format 1_1 used for scheduling of the PDSCH is mapped. In a case that the number of downlink component carriers configured for the terminal apparatus 1 in a certain serving cell group is two or more (case that downlink carrier aggregation is operated in a certain serving cell group), the number of bits of the carrier indicator field included in the DCI format 1_1 used for scheduling of the PDSCH mapped to the certain serving cell group may be 1 bit or more (for example, 3 bits). In a case that the number of downlink component carriers configured for the terminal apparatus 1 in a certain serving cell group is one (case that downlink carrier aggregation is not operated in a certain serving cell group), the number of bits of the carrier indicator field included in the DCI format 1_1 used for scheduling of the PDSCH mapped to the certain serving cell group may be 0 bits (or the carrier indicator field need not be included in the DCI format 1_1 used for scheduling of the PDSCH mapped to the certain serving cell group).

The PDSCH may be used for conveying the transport block. The PDSCH may be used for transmitting the transport block delivered by the DL-SCH. The PDSCH may be used for conveying the transport block. The transport block may be mapped to the PDSCH. The transport block corresponding to the DL-SCH may be mapped to the PDSCH. The base station apparatus 3 may transmit the PDSCH. The terminal apparatus 1 may receive the PDSCH.

The downlink physical signal may correspond to a set of resource elements. The downlink physical signal need not carry information generated in a higher layer. The downlink physical signal may be a physical signal used in the downlink component carrier. The downlink physical signal may be transmitted by the base station apparatus 3. The downlink physical signal may be transmitted by the terminal apparatus 1. In the radio communication system according to an aspect of the present embodiment, at least a part or all of the following downlink physical signals may be used.
- Synchronization signal (SS)
- DownLink DeModulation Reference Signal (DL DMRS)
- Channel State Information-Reference Signal (CSI-RS)
- DownLink Phase Tracking Reference Signal (DL PTRS)

The synchronization signal may be used for the terminal apparatus 1 to take synchronization in one or both of the frequency domain and the time domain in the downlink. The synchronization signal is a general term for the Primary Synchronization Signal (PSS) and the Secondary Synchronization Signal (SSS).

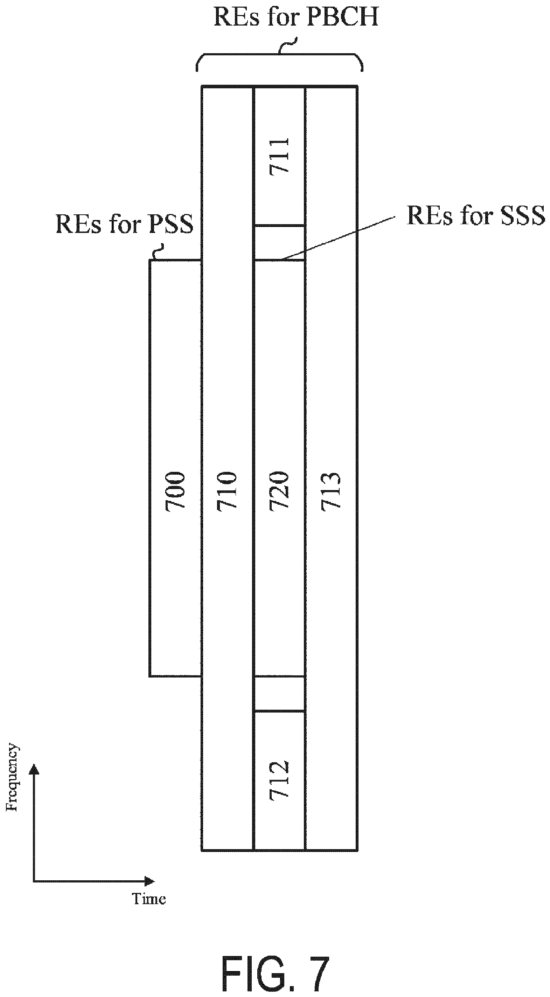

FIG. 7 is a diagram illustrating a configuration example of the SS/PBCH block according to an aspect of the present embodiment. In FIG. 7, the horizontal axis corresponds to a time axis (OFDM symbol index l_{sym}), and the vertical axis represents the frequency domain. A block 700 represents a set of resource elements for the PSS. A block 720 represents a set of resource elements for the SSS. Four blocks (blocks 710, 711, 712, and 713) represent a set of resource elements for the PBCH and the DMRS for the PBCH (DMRS related to the PBCH, DMRS included in the PBCH, DMRS corresponding to the PBCH).

As illustrated in FIG. 7, the SS/PBCH block includes the PSS, the SSS, and the PBCH. The SS/PBCH block includes four consecutive OFDM symbols. The SS/PBCH block includes 240 subcarriers. The PSS is mapped to the 57th to 183rd subcarriers in the first OFDM symbol. The SSS is mapped to the 57th to 183rd subcarriers in the third OFDM symbol. Zero may be set to the 1st to 56th subcarriers of the first OFDM symbol. Zero may be set to the 184th to 240th subcarriers of the first OFDM symbol. Zero may be set to the 49th to 56th subcarriers of the third OFDM symbol. Zero may be set to the 184th to 192nd subcarriers of the third OFDM symbol. The PBCH is mapped to subcarriers which are the 1st to 240th subcarriers of the second OFDM symbol and to which the DMRS for the PBCH is not mapped. The PBCH is mapped to subcarriers which are the 1st to 48th subcarriers of the third OFDM symbol and to which the DMRS for the PBCH is not mapped. The PBCH is mapped to subcarriers which are the 193rd to 240th subcarriers of the third OFDM symbol and to which the DMRS for the PBCH is not mapped. The PBCH is mapped to subcarriers which are the 1st to 240th subcarriers of the fourth OFDM symbol and to which the DMRS for the PBCH is not mapped.

The PSS, the SSS, the PBCH, and the antenna port of the DMRS for the PBCH may be the same.

The PBCH over which the symbol of the PBCH on a certain antenna port is conveyed may be inferred from the DMRS for the PBCH mapped to the slot to which the PBCH is mapped and for the PBCH included in the SS/PBCH block including the PBCH.

The DL DMRS is a general term for a DMRS for the PBCH, a DMRS for the PDSCH, and a DMRS for the PDCCH.

A set of antenna ports of the DMRS for the PDSCH (DMRS related to the PDSCH, DMRS included in the PDSCH, DMRS corresponding to the PDSCH) may be given based on a set of antenna ports for the PDSCH. In other words, the set of antenna ports of the DMRS for the PDSCH may be the same as the set of antenna ports for the PDSCH.

Transmission of the PDSCH and transmission of the DMRS for the PDSCH may be indicated (or may be scheduled) by one DCI format. The PDSCH and the DMRS for the PDSCH may be collectively referred to as a PDSCH. Transmission of the PDSCH may be transmission of the PDSCH and the DMRS for the PDSCH.

A propagation path of the PDSCH may be inferred from the DMRS for the PDSCH. In a case that a set of resource elements in which the symbol of a certain PDSCH is conveyed and a set of resource elements in which the symbol of the DMRS for the certain PDSCH is conveyed are included in the same Precoding Resource Group (PRG), the PDSCH over which the symbol of the PDSCH on a certain antenna port is conveyed may be inferred from the DMRS for the PDSCH.

The antenna port of the DMRS for the PDCCH (DMRS related to the PDCCH, DMRS included in the PDCCH, DMRS corresponding to the PDCCH) may be the same as the antenna port for the PDCCH.

The PDCCH may be inferred from the DMRS for the PDCCH. In other words, a propagation path of the PDCCH may be inferred from the DMRS for the PDCCH. In a case that the same precoder is (assumed to be) applied to a set of resource elements in which the symbol of a certain PDCCH is conveyed and a set of resource elements in which the symbol of the DMRS for the certain PDCCH is conveyed, the PDCCH over which the symbol of the PDCCH on a certain antenna port is conveyed may be inferred from the DMRS for the PDCCH.

A Broadcast CHannel (BCH), an Uplink-Shared CHannel (UL-SCH), and a Downlink-Shared CHannel (DL-SCH) are transport channels. A transport channel defines the relationship between a physical layer channel and a MAC layer channel (also referred to as a logical channel).

The BCH of the transport layer is mapped to the PBCH of the physical layer. In other words, a transport block passing through the BCH of the transport layer is delivered to the PBCH of the physical layer. The UL-SCH of the transport layer is mapped to the PUSCH of the physical layer. In other words, the transport block passing through the UL-SCH of the transport layer is delivered to the PUSCH of the physical layer. The DL-SCH of the transport layer is mapped to the PDSCH of the physical layer. In other words, a transport block passing through the DL-SCH of the transport layer is delivered to the PDSCH of the physical layer.

For each serving cell, one UL-SCH and one DL-SCH may be given. The BCH may be given to the PCell. The BCH need not be given to the PSCell and the SCell.

The MAC layer controls the Hybrid Automatic Repeat reQuest (HARQ) for each transport block.

A Broadcast Control CHannel (BCCH), a Common Control CHannel (CCCH), and a Dedicated Control CHannel (DCCH) are logical channels. For example, the BCCH is a channel of the RRC layer used for transmitting the MIB or system information. The Common Control CHannel (CCCH) may be used for transmitting a common RRC message in multiple terminal apparatuses 1. Here, the CCCH may be, for example, used for the terminal apparatus 1 that is not in a state of RRC connection. The Dedicated Control CHannel (DCCH) may be at least used for transmitting an RRC message dedicated to the terminal apparatus 1. Here, the DCCH may be, for example, used for the terminal apparatus 1 that is in a state of RRC connection.

For example, the system information (SI) may include some system information blocks (SIB). The system information may be also divided into Minimum SI and Other SI. The Minimum SI may include basic information required for an initial access. Further, the Minimum SI may include information for acquiring the Other SI. The Minimum SI may include a MIB and an SIB1. The Other SI may include all SIBs that are not broadcast in the Minimum SI. These SIBs may be broadcast or transmitted in the DL-SCH.

The SIB1 may define scheduling of the Other SI. The SIB1 may include information required for the initial access. The SIB1 may be referred to as a Remaining Minimum SI (RMSI). The SIB1 may be periodically left on the DL-SCH. The SIB1 may be transmitted in a dedicated manner on the DL-SCH to some UEs in an RRC_CONNECTED state.

The higher layer parameter common to the multiple terminal apparatuses 1 is also referred to as a common higher layer parameter. Here, the common higher layer parameter may be defined as a parameter specific to the serving cell. Here, the parameter specific to the serving cell may be a parameter common to terminal apparatuses configured with the serving cell (for example, the terminal apparatuses 1-A, 1-B, and 1-C).

For example, an RRC message delivered to the BCCH may include the common higher layer parameter. For example, an RRC message delivered on the DCCH may include the common higher layer parameter.

Among certain higher layer parameters, a higher layer parameter different from the common higher layer parameter is also referred to as a dedicated higher layer parameter. Here, the dedicated higher layer parameter may provide a dedicated RRC parameter to the terminal apparatus 1-A configured with the serving cell. In other words, the dedicated RRC parameter is a higher layer parameter capable of providing a unique configuration to each of the terminal apparatuses 1-A, 1-B, and 1-C.

The BCCH of the logical channel may be mapped to the BCH or the DL-SCH of the transport layer. For example, a transport block including the information of the MIB is delivered to the BCH of the transport layer. A transport block including system information other than the MIB is delivered to the DL-SCH of the transport layer. The CCCH is mapped to the DL-SCH or the UL-SCH. In other words, a transport block mapped to the CCCH is delivered to the DL-SCH or the UL-SCH. The DCCH is mapped to the DL-SCH or the UL-SCH. In other words, a transport block mapped to the DCCH is delivered to the DL-SCH or the UL-SCH.

The RRC message includes one or multiple parameters managed in the RRC layer. Here, the parameters managed in the RRC layer are also referred to as RRC parameters. For example, the RRC message may include the MIB. The RRC message may include the system information. The RRC message may include a message corresponding to the CCCH. The RRC message may include a message corresponding to the DCCH. The RRC message including a message corresponding to the DCCH is also referred to as a dedicated RRC message.

The higher layer parameter is an RRC parameter or a parameter included in a Medium Access Control Control Element (MAC CE). In other words, the higher layer parameter is a general term for the MIB, the system information, a message corresponding to the CCCH, a message corresponding to the DCCH, and parameters included in the MAC CE. The parameters included in the MAC CE are transmitted by a MAC Control Element (CE) command.

Procedures performed by the terminal apparatus 1 include at least a part or all of the following 5A to 5C.
5A) Cell search
5B) Random access
5C) Data communication

The cell search is a procedure used for the terminal apparatus 1 synchronizing with a certain cell related to the time domain and the frequency domain and detecting a physical cell identity (physical cell ID). In other words, by means of the cell search, the terminal apparatus 1 may perform synchronization with a certain cell in the time domain and the frequency domain and detect a physical cell ID.

A sequence of the PSS is given based at least on the physical cell ID. A sequence of the SSS is given based at least on the physical cell ID.

An SS/PBCH block candidate indicates a resource allowed to (possible to, scheduled to, configured to, defined to, having a possibility to) transmit the SS/PBCH block.

A set of SS/PBCH block candidates in a certain half radio frame is also referred to as an SS burst set. The SS burst set is also referred to as a transmission window (transmissionwindow), an SS transmission window, or a Discovery Reference Signal transmission window (DRS transmission window). The SS burst set is a general term including at least a first SS burst set and a second SS burst set.

The base station apparatus 3 transmits SS/PBCH blocks with one or multiple indices in a prescribed periodicity. The terminal apparatus 1 may detect at least one SS/PBCH block out of the SS/PBCH blocks with one or multiple indices and attempt decoding of the PBCH included in the at least one SS/PBCH block.

The random access is a procedure including at least a part or all of a message 1, a message 2, a message 3, and a message 4.

The message 1 is a procedure in which the PRACH is transmitted by the terminal apparatus 1. The terminal apparatus 1 transmits the PRACH in one PRACH occasion selected out of one or multiple PRACH occasions based at least on the index of the SS/PBCH block candidate detected based on the cell search. Each of the PRACH occasions is defined based at least on resources in the time domain and the frequency domain.

The terminal apparatus 1 transmits one random access preamble selected out of the PRACH occasions corresponding to the indices of the SS/PBCH block candidates in which the SS/PBCH block is detected.

The message 2 is a procedure for attempting to detect a DCI format 1_0 with a Cyclic Redundancy Check (CRC) scrambled by a Random Access - Radio Network Temporary Identifier (RA-RNTI) by the terminal apparatus 1. The terminal apparatus 1 attempts detection of the PDCCH including the DCI format in a control resource set given based on the MIB, which is included in the PBCH included in the SS/PBCH block detected based on cell search, and in resources indicated based on a configuration of a search space set. The message 2 is also referred to as a random access response.

The message 3 is a procedure for transmitting the PUSCH scheduled by using a random access response grant included in a DCI format 1_0 detected through the procedure of the message 2. Here, the random access response grant (random access responsegrant) is indicated by the MAC CE included in the PDSCH scheduled by using the DCI format 1_0.

The PUSCH scheduled based on the random access response grant is either a message 3 PUSCH or a PUSCH. The message 3 PUSCH includes a contention resolution identifier (contention resolution ID) MAC CE. The contention resolution ID MAC CE includes a contention resolution ID.

Retransmission of the message 3 PUSCH is scheduled by using a DCI format 0_0 with a CRC scrambled based on a Temporary Cell - Radio Network Temporary Identifier (TC-RNTI).

The message 4 is a procedure for attempting to detect a DCI format 1_0 with a CRC scrambled based on either of a Cell - Radio Network Temporary Identifier (C-RNTI) or a TC-RNTI. The terminal apparatus 1 receives a PDSCH scheduled based on the DCI format 1_0. The PDSCH may include a contention resolution ID.

Data communication is a general term for downlink communication and uplink communication.

In the data communication, the terminal apparatus 1 attempts detection of the PDCCH (monitors the PDCCH, supervises the PDCCH) in a control resource set and resources identified based on a search space set.

The control resource set is a set of resources including a certain number of resource blocks and a certain number of OFDM symbols. In the frequency domain, the control resource set may include continuous resources (non-interleaved mapping) or may include distributed resources (interleaver mapping).

A set of resource blocks constituting the control resource set may be indicated by the higher layer parameter. The number of OFDM symbols constituting the control resource set may be indicated by the higher layer parameter.

One CORESET pool index may be provided for one or multiple control resource sets (CORESETs). For example, the CORESET pool index may be provided by a higher layer parameter. For example, in a case that the CORESET pool index is not provided by the higher layer parameter, the CORESET pool index may be 0. A value of the CORESET pool index may be 0 or 1. The CORESET pool index may be referred to as an index of a CORESET resource pool. For example, the CORESET pool index may be provided in one active downlink BWP of one serving cell. For example, the CORESET pool index with a value of 0 may be provided for first multiple CORESETs.

The terminal apparatus 1 may apply a first procedure for reporting the HARQ-ACK information associated with the first CORESETs and a second procedure for reporting the HARQ-ACK information associated with second CORESETs. The terminal apparatus 1 may separately apply the first procedure and the second procedure. The first CORESETs and the second CORESETs may be the CORESETs in an active downlink BWP of one serving cell. The CORESET pool index with a value of 0 may be provided for the first CORESETs. The CORESET pool index with a value of 1 may be provided for the second CORESETs. The first CORESETs may be first one or multiple CORESETs. The second CORESETs may be second one or multiple CORESETs.

A Transmission Configuration Indication state (TCI state) may be provided by a DCI format. One or multiple TCI state configurations (or a list of the configurations) may be provided by higher layer parameters for decoding the PDSCH. For example, the terminal apparatus 1 may decode the PDSCH in accordance with the decoded PDCCH. One TCI state may include a parameter for configuring a QCL relationship between a downlink reference signal and a first antenna port. For example, the first antenna port may be a DMRS port of a PDSCH (an antenna port associated with a DMRS). The first antenna port may be a DMRS port of a PDCCH. The first antenna port may be a CSI-RS port of a CSI-RS resource. The QCL relationship may be configured by a higher layer parameter. For example, a QCL relationship may be configured for a first downlink reference signal by a higher layer parameter qcl-Type1. For example, a QCL relationship may be configured for a second downlink reference signal by a higher layer parameter qcl-Type2. For example, a QCL relationship between the first antenna port and the second antenna port may indicate that the first antenna port and the second antenna port are QCLed. The downlink reference signal may be a CSI-RS or an SS/PBCH block.

The CORESET pool index of the first CORESET may be different from the CORESET pool index of the second CORESET. Two different values of the CORESET pool indexes may be configured to be included in in different CORESETS by a higher layer parameter. The first antenna port associated with one CORESET pool index of one serving cell may be assumed to be QCLed with the first reference signal.

The terminal apparatus 1 attempts detection of the PDCCH in a search space set. Here, an attempt to detect the PDCCH in the search space set may be an attempt to detect a candidate of the PDCCH in the search space set, may be an attempt to detect a DCI format in the search space set, may be an attempt to detect the PDCCH in the control resource set, may be an attempt to detect a candidate of the PDCCH in the control resource set, or may be an attempt to detect a DCI format in the control resource set.

The search space set is defined as a set of candidates of the PDCCH. The search space set may be a Common Search Space (CSS) set or may be a UE-specific Search Space (USS) set. The terminal apparatus 1 attempts detection of candidates of the PDCCH in a part or all of a Type 0 PDCCH common search space set, a Type 0a PDCCH common search space set, a Type 1 PDCCH common search space set, a Type 2 PDCCH common search space set, a Type 3 PDCCH common search space set, and/or a UE-specific PDCCH search space set (UE-specific search space set).

The Type 0 PDCCH common search space set may be used as a common search space set having an index of 0. The Type 0 PDCCH common search space set may be a common search space set having an index of 0.

The CSS set is a general term for the Type 0 PDCCH common search space set, the Type 0a PDCCH common search space set, the Type 1 PDCCH common search space set, the Type 2 PDCCH common search space set, and the Type 3 PDCCH common search space set. The USS set is also referred to as a UE-specific PDCCH search space set.

A certain search space set is related to (included in, corresponds to) a certain control resource set. The index of the control resource set related to the search space set may be indicated by the higher layer parameter.

For a certain search space set, a part or all of 6A to 6C may be indicated by at least the higher layer parameter.
6A) PDCCH monitoring periodicity
6B) PDCCH monitoring pattern within a slot
6C) PDCCH monitoring offset

The monitoring occasion of a certain search space set may correspond to the OFDM symbol to which the first OFDM symbol of a control resource set related to the certain search space set is mapped. The monitoring occasion of a certain search space set may correspond to a resource of a control resource set starting from the first OFDM symbol of the control resource set related to the certain search space set. The monitoring occasion of the search space set is given based at least on a part or all of the monitoring periodicity of the PDCCH, the monitoring pattern of the PDCCH in a slot, and the monitoring offset of the PDCCH.

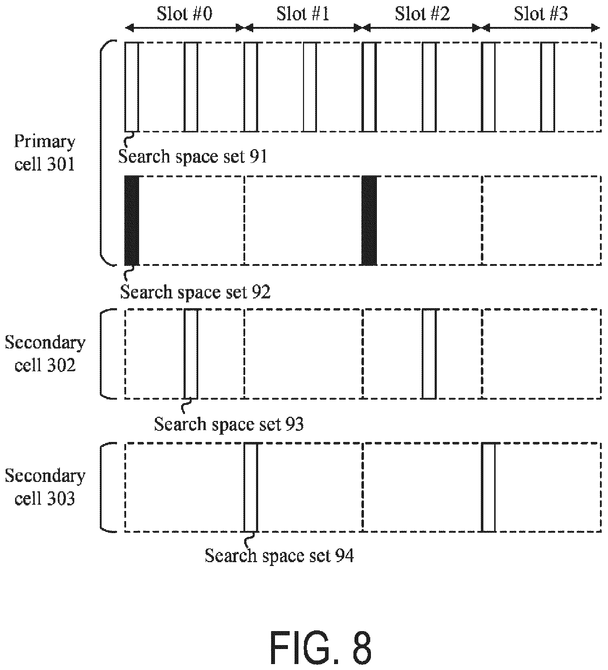

FIG. 8 is a diagram illustrating an example of the monitoring occasions for the search space sets according to an aspect of the present embodiment. In FIG. 8, a search space set 91 and a search space set 92 are configured in a primary cell 301, a search space set 93 is configured in a secondary cell 302, and a search space set 94 is configured in a secondary cell 303.

In FIG. 8, solid white blocks in the primary cell 301 represent a search space set 91, solid black blocks in the primary cell 301 represent a search space set 92, blocks in the secondary cell 302 represent a search space set 93, and blocks in the secondary cell 303 represent a search space set 94.

The monitoring periodicity of the search space set 91 is set to one slot, the monitoring offset of the search space set 91 is set to zero slots, and the monitoring pattern of the search space set 91 is set to [1, 0, 0, 0, 0, 0, 0, 1, 0, 0, 0, 0, 0, 0]. In other words, the monitoring occasions for the search space set 91 corresponds to the first OFDM symbol (OFDM symbol #0) and the eighth OFDM symbol (OFDM symbol #7) in each of the slots.

The monitoring periodicity of the search space set 92 is set to two slots, the monitoring offset of the search space set 92 is set to zero slots, and the monitoring pattern of the search space set 92 is set to [1, 0, 0, 0, 0, 0, 0, 0, 0, 0, 0, 0, 0, 0]. In other words, the monitoring occasion for the search space set 92 corresponds to the first OFDM symbol (OFDM symbol #0) in each of the even-numbered slots.

The monitoring periodicity of the search space set 93 is set to two slots, the monitoring offset of the search space set 93 is set to zero slots, and the monitoring pattern of the search space set 93 is set to [0, 0, 0, 0, 0, 0, 0, 1, 0, 0, 0, 0, 0, 0]. In other words, the monitoring occasion for the search space set 93 corresponds to the eighth OFDM symbol (OFDM symbol #7) in each of the even-numbered slots.

The monitoring periodicity of the search space set 94 is set to two slots, the monitoring offset of the search space set 94 is set to one slot, and the monitoring pattern of the search space set 94 is set to [1, 0, 0, 0, 0, 0, 0, 0, 0, 0, 0, 0, 0, 0]. In other words, the monitoring occasion for the search space set 94 corresponds to the first OFDM symbol (OFDM symbol #0) in each of the odd-numbered slots.

The Type 0 PDCCH common search space set may be at least used for the DCI format with a Cyclic Redundancy Check (CRC) sequence scrambled by a System Information-Radio Network Temporary Identifier (SI-RNTI).

The Type 0a PDCCH common search space set may be at least used for the DCI format with a Cyclic Redundancy Check (CRC) sequence scrambled by a System Information-Radio NetworkTemporary Identifier (SI-RNTI).

The Type 1 PDCCH common search space set may be at least used for the DCI format with a CRC sequence scrambled by a Random Access-Radio Network Temporary Identifier (RA-RNTI) and/or a CRC sequence scrambled by a Temporary Cell-Radio Network Temporary Identifier (TC-RNTI).

The Type 2 PDCCH common search space set may be used for the DCI format with a CRC sequence scrambled by a Paging- Radio Network Temporary Identifier (P-RNTI).

The Type 3 PDCCH common search space set may be used for the DCI format with a CRC sequence scrambled by a Cell-Radio Network Temporary Identifier (C-RNTI).

The UE-specific PDCCH search space set may be at least used for the DCI format with a CRC sequence scrambled by a C-RNTI.

In the downlink communication, the terminal apparatus 1 detects a downlink DCI format. The detected downlink DCI format is at least used for resource assignment of the PDSCH. The detected downlink DCI format is also referred to as a downlink assignment. The terminal apparatus 1 attempts reception of the PDSCH. Based on the PUCCH resource indicated based on the detected downlink DCI format, the HARQ-ACK corresponding to the PDSCH (HARQ-ACK corresponding to the transport block included in the PDSCH) is reported to the base station apparatus 3.

In the uplink communication, the terminal apparatus 1 detects an uplink DCI format. The detected DCI format is at least used for resource assignment of the PUSCH. The detected uplink DCI format is also referred to as an uplink grant. The terminal apparatus 1 performs transmission of the PUSCH.

In configured grant, the uplink grant for scheduling the PUSCH is configured for each transmission periodicity of the PUSCH. A part or all of pieces of information indicated by an uplink DCI format in a case that the PUSCH is scheduled by the uplink DCI format may be indicated by the uplink grant configured in a case of the configured grant.

The UL slot may be a slot including UL symbols. The special slot may be a slot including a UL symbol, a flexible symbol, and a DL symbol. The DL slot may be a slot including DL symbols.

The UL symbol may be an OFDM symbol configured or indicated for the uplink in time division duplex. The UL symbol may be an OFDM symbol configured or indicated for the PUSCH, the PUCCH, the PRACH, or the SRS. The UL symbol may be provided by a higher layer parameter tdd-UL-DL-ConfigurationCommon. The UL symbol may be provided by a higher layer parameter tdd-UL-DL-ConfigurationDedicated. The UL slot may be provided by the higher layer parameter tdd-UL-DL-ConfigurationCommon. The UL slot may be provided by the higher layer parameter tdd-UL-DL-ConfigurationDedicated.

The DL symbol may be an OFDM symbol configured or indicated for the downlink in time division duplex. The DL symbol may be an OFDM symbol configured or indicated for the PDSCH or the PDCCH. The DL symbol may be provided by the higher layer parameter tdd-UL-DL-ConfigurationCommon. The DL symbol may be provided by the higher layer parameter tdd-UL-DL-ConfigurationDedicated. The DL slot may be provided by the higher layer parameter tdd-UL-DL-ConfigurationCommon. The DL slot may be provided by the higher layer parameter tdd-UL-DL-ConfigurationDedicated.

The flexible symbol may be an OFDM symbol that is not configured or indicated as a UL symbol or a DL symbol among the OFDM symbols within a certain periodicity. The certain periodicity may be a periodicity given by a higher layer parameter dl-UL-TransmissionPeriodicity. The flexible symbol may be an OFDM symbol configured or indicated for the PDSCH, the PDCCH, the PUSCH, the PUCCH, or the PRACH.

The higher layer parameter tdd-UL-DL-ConfigurationCommon may be a parameter that configures one of a UL slot, and a DL slot, a special slot for each of one or multiple slots. The higher layer parameter tdd-UL-DL-ConfigurationDedicated may be a parameter that configures any one of a UL symbol, and a DL symbol, a flexible symbol for a flexible symbol in each of the one or multiple slots. tdd-UL-DL-ConfigurationCommon may be a common higher layer parameter. tdd-UL-DL-ConfigurationDedicated may be a dedicated higher layer parameter. Configuration of any of a UL slot, and a DL slot, a special slot for each of one or multiple slots may be configuration of a TDD pattern or a slot format.

Some or all of a first uplink timing, a first TA, a first TAG, and a first subTAG may correspond to a first uplink frame. Some or all of a second uplink timing, a second TA, a second TAG, and a second subTAG may correspond to a second uplink frame. The TDD pattern may be configured for each uplink frame. One of TDD and FDD may be determined for each uplink frame.

Multiple Transmission Reception Points or Transmit/Receive Points (TRPs) may be used. The base station apparatus 3 may be configured with multiple TRPs (Multi-TRP). The terminal apparatus 1 may be scheduled by two TRPs in one serving cell. For the Multi-TRP, one operation mode of single-DCI and multi-DCI may be used. For the Multi-TRP, uplink control may be completed in the MAC layer and the physical layer. For the Multi-TRP, downlink control may be completed in the MAC layer and the physical layer. In the single-DCI mode, the terminal apparatus 1 may be scheduled by the same DCI for two TRPs. In the multi-DCI mode, the terminal apparatus 1 may be scheduled by independent DCI from each TRP. In the multi-DCI mode, each TRP in the Multi-TRP may be identified by TRP information. In other words, one TRP among the multi-TRP may be identified by one piece of TRP information.

The TRP information may be used to select one TRP. One control resource set (CORESET) may be associated with an index of a CORESET resource pool. The terminal apparatus 1 may transmit a PUSCH based on the index of the CORESET resource pool.

The TRP information may be a CORESET pool index. The TRP information may be associated with an index of a CORESET resource pool. For example, a first CORESET pool index may be associated with a first TRP and a second CORESET pool index may be associated with a second TRP. The TRP information may be associated with a pool (or pool index) of the TCI states. First one or multiple TCI states may be associated with a pool index of the first TCI states. Second one or multiple TCI states may be associated with a pool index of the second TCI states. The TRP information may be a TAG ID (subTAG ID). For example, a first TAG ID (subTAG ID) may be associated with the first TRP, and a second TAG ID (subTAG ID) may be associated with the second TRP.

A value of a Timing advance offset (TA offset) may be determined by a higher layer parameter. A timing advance (TA) may be determined based at least on the TA offset. In one serving cell, one TA offset may be provided. In one serving cell, two TA offsets may be provided. In a case that the higher layer parameter is not provided, the terminal apparatus 1 may determine the value of the TA offset. The terminal apparatus 1 may determine values of two TA offsets in one serving cell. The value of the TA offset may be N_{TA, offset}. The higher layer parameter may be n-TimingAdvanceOffset. The determination of the TA may be adjustment of the uplink timing.

In a case that two uplink carriers are configured in one serving cell, a value of one TA offset may be applied to the two uplink carriers. In a case that two transmission reception points (TRPs) are configured in one serving cell, a value of one TA offset may be applied to the two TRPs. In a case that two TRPs are configured in one serving cell, values of the two TA offset may be applied to the respective TRPs.

The terminal apparatus 1 may adjust the uplink timing. For example, the terminal apparatus 1 may adjust the uplink timing in response to receiving a Timing advance command (TA command). For example, in response to receiving one Timing advance command (TA command) for one Timing advance group (TAG), the terminal apparatus 1 may adjust the uplink timing for the PUSCH/SRS/PUCCH transmission on all serving cells in one TAG. For example, in response to receiving one TA command for one TAG, the terminal apparatus 1 may adjust the uplink timing for the PUSCH/SRS/PUCCH transmission on one or multiple serving cells belonging to one TAG. For example, the terminal apparatus 1 may adjust the uplink timing based on a value of N_{TA, offset}. N_{TA, offset} may be the same for all serving cells in one TAG. N_{TA, offset} need not be the same for all serving cells in one TAG. The terminal apparatus 1 may adjust the uplink timing based on one or both of the value of N_{TA, offset} and the TA command. The uplink timing may be the same for all serving cells in one TAG. The uplink timing need not be the same for all serving cells in one TAG. For example, the first uplink timing may be the same for a first part of the serving cells in one TAG. For example, the second uplink timing may be the same for a second part of the serving cells in one TAG. All serving cells in one TAG may be divided into the first part and the second part.

The terminal apparatus 1 may adjust the uplink timing in response to receiving the TA command. For example, in response to receiving one Timing advance command (TA command) for one subTAG, the terminal apparatus 1 may adjust the uplink timing for the PUSCH/SRS/PUCCH transmission on the all serving cells in one subTAG and on the TRP. For example, in response to receiving one TA command for one subTAG, the terminal apparatus 1 may adjust the uplink timing for the PUSCH/SRS/PUCCH transmission on one or both of one or multiple serving cells belonging to one subTAG and one or multiple TRPs. The uplink timing may be the same for one or both of all serving cells in one subTAG and the TRP.

The terminal apparatus 1 may determine the uplink timing based at least on some or all of the TA command, the TA offset, and the TRP information. The first uplink timing and the second uplink timing may be determined based at least on the TRP information. For example, the Transmission Reception point (TRP) information may be information for identifying one TRP among one or multiple TRPs. For example, the TRP information may be an index for identifying one TRP. For example, one TRP may be determined based on the TRP information. For example, the TRP information may be information for identifying one or multiple TRPs. The TRP information may be provided by a higher layer parameter. The TRP information may be included in the random access response. The TRP information may be included in the DCI format.

The first uplink timing may be determined based on a timing adjustment indication for one TAG from the MCG. The second uplink timing may be determined based on a timing adjustment indication for one TAG from the SCG.

The TA command may be changed based on the subcarrier spacing. For example, one TA command for one TAG (or subTAG) may indicate a change to the uplink timing in the subcarrier spacing configuration µ. For example, the uplink timing may be changed in multiples of 16*64*T_{c}/2^{µ}. "*" may be a multiplication operator.

A Timing advance (TA) of the random access preamble may be 0.

The TA command may be included in the random access response. The TA command may be transmitted as a MAC CE command. For example, the TA command may be Absolute timing advance command MAC CE. A TA command T_{A} in the case of the random access response or the Absolute timing advance command MAC CE may indicate the value of N_{TA} for one TAG (or subTAG). For example, T_{A} may be an integer from 0 to 3846. For example, N_{TA} may be T_{A}*16*64/2^{µ}. N_{TA} may be associated with a subcarrier spacing of a certain uplink transmission. For example, the certain uplink transmission may be uplink transmission from the terminal apparatus 1. For example, the certain uplink transmission may be the first uplink transmission after receiving the random access response. For example, the certain uplink transmission may be the first uplink transmission after receiving the absolute timing advance command MAC CE. T_{A} may be an index value. The uplink transmission may be an uplink physical channel transmission.

The TA command T_{A} may indicate an adjustment of a current N_{TA} value for one TAG (or subTAG). For example, the TA command T_{A} may indicate an adjustment of N_{TA, old} to N_{TA, new}. N_{TA, new} may be N_{TA, old} + (T_{A} - 31)*16*64/2^{µ}. For example, T_{A} may be an integer from 0 to 63.

In a case that the terminal apparatus has one or multiple active uplink BWPs, the TA command (TA command value) may be relative to a maximum subcarrier spacing of the one or multiple active uplink BWPs. The TA command may be a TA command in one TAG (or subTAG) including uplink BWPs on two uplink carriers of one serving cell. For example, N_{TA, new} for one uplink BWP with an initial subcarrier spacing may be rounded to align with a timing advance granularity (TA granularity) for one uplink BWP with the initial subcarrier spacing. The rounding of the value may be performing a rounding process of the value. For example, N_{T A}, _{new} may be rounded while satisfying Timing advance accuracy requirements (TA accuracy requirements).

An adjustment of N_{TA} by a positive value may indicate advancing the uplink transmission timing (uplink timing) for one Timing advance group (TAG). An adjustment of N_{TA} by a negative value may indicate delaying the uplink transmission timing for one TAG.

In a case that one TA command is received in a first slot n, an adjustment of the uplink transmission timing may be applied from the beginning of a second slot. The first slot n may be an uplink slot. The uplink slot may be a slot corresponding to an uplink frame. The second slot may be n + k + 1 + 2^{µ}*K_{offset}. In other words, the second slot may be a slot after k + 1 + 2^{µ}*K_{offset} slots from the first slot n. K_{offset} may be provided by a higher layer parameter. k may be ceil(N^{subframe, µ} ₛₗₒₜ · (N_{T, 1} + N_{T, 2} + N_{TA, max} + 0.5)/T_{sf}). A unit for N_{T, 1} may be a millisecond. N_{T, 1} may be a time duration in units of milliseconds of N₁ symbols. N₁ symbols may correspond to a PDSCH processing time. N_{T, 2} may be a time duration in units of milliseconds of N₂ symbols. N₂ symbols may correspond to a PUSCH preparation time. N_{TA, max} may be a maximum timing advance value (TA value) in units of milliseconds. N_{TA, max} may be a maximum TA value that can be provided by a TA command field of 12 bits. N^{subframe, µ}ₛₗₒₜ may be the number of slots in one subframe. T_{sf} may be 1 microsecond. T_{sf} may be a subframe duration. K_{offset} may be K_{cell}, _{offset} - K_{UE}, _{offset}. K_{cell}, _{offset} may be provided by a higher layer parameter. K_{UE}, _{offset} may be provided by one MAC CE command. K_{cell}, _{offset} may be 0. K_{UE}, _{offset} may be 0. One or both of N₁ and N₂ may be determined in relation to a minimum subcarrier spacing (SCS). The minimum subcarrier spacing may be a minimum subcarrier spacing among the subcarrier spacings of all configured downlink BWPs and all configured uplink BWPs. In a case of µ = 0, N₁ may be 14. The slot n and N^{subframe, µ}ₛₗₒₜ may be determined in relation to the minimum subcarrier spacing. N_{TA, max} may be determined in relation to the minimum subcarrier spacing. The slot n may be the last slot among one or multiple slots overlapping with the slot of PDSCH reception. For PDSCH reception, it may be assumed that T_{TA} = 0. One TA command may be received on a PDSCH. A PDSCH including one TA command may be received. The PDSCH may provide one TA command.

In a case that the terminal apparatus 1 changes the active uplink BWP, the terminal apparatus 1 may determine the TA command (TA command value) based on the subcarrier spacing of the changed active uplink BWP. For example, in a case that the terminal apparatus 1 changes the active uplink BWP between a time of receiving a TA command and a time of applying an adjustment for the uplink transmission timing, the terminal apparatus 1 may determine the TA command based on the subcarrier spacing of the new active uplink BWP. In a case that the active uplink BWP is changed after applying the adjustment for the uplink transmission timing, the terminal apparatus 1 may assume the same absolute timing advance command value (absolute timing advance command MAC CE). In other words, a first absolute timing advance command value before the active uplink BWP is change may be the same as a second absolute timing advance command value after the active uplink BWP is changed.

In a case that the downlink timing is changed and in a case that the downlink timing is not compensated, the terminal apparatus 1 may change N_{TA}. In a case that the downlink timing is changed and in a case that the downlink timing is partially compensated by the uplink timing adjustment without the TA command, the terminal apparatus 1 may change N_{TA}. The uplink timing adjustment may be determination or change of the uplink timing.

In a case that two adjacent slots overlap due to one TA command, the latter slot may be reduced.

A Timing advance group (TAG) may be a group of one or multiple serving cells. One or multiple serving cells may be configured by an RRC. One or multiple serving cells may use one TA value. One or multiple serving cells may use one timing reference cell. A Primary TAG (PTAG) may be a TAG including the SpCell. A Secondary TAG (STAG) may be a TAG not including the SpCell. One or multiple serving cells may use two TA values. For each TAG, a TAG ID may be determined.

A subTAG may be a group of one or both of one or multiple serving cells and one or multiple TRPs. A subTAG may be a group of serving cells using the same TA (TA value). For example, a subTAG may be associated with one piece of TRP information. For example, a subTAG may be associated with one TRP. A serving cell associated with a subTAG need not be associated with a TAG. For example, a subTAG may be configured for one serving cell. For example, a serving cell associated with a subTAG may be associated with a TAG. A subTAG may be a group of one or multiple TRPs. A subTAG may be a group of TRPs using the same TA (TA value). For example, a subTAG may be associated with one serving cell. For each subTAG, a subTAG ID may be determined. A subTAG may be a type of TAG. In other words, a TAG and a subTAG may be referred to as a TAG.

The RRC layer may configure one or multiple higher layer parameters for maintenance of uplink time alignment. For example, the RRC layer may configure a time alignment timer. For example, the time alignment timer may be configured by a higher layer parameter timeAlignmentTimer. The time alignment timer may control a first time. The first time may be a time at which the MAC entity considers the multiple serving cells to belong to the associated TAG. For example, the time alignment timer may be a time for uplink time alignment. In other words, the fact that the time alignment timer is operating may mean that the time alignment is performed. The fact that the time alignment is performed may mean that the uplink timing is determined (or adjusted). In other words, the TA may perform time alignment.

The RRC layer may configure one or multiple higher layer parameters for maintenance of multiple uplink time alignments. For example, the RRC layer may configure multiple time alignment timers. At least one of the multiple time alignment timers may be associated with a subTAG. At least one of the multiple time alignment timers may be associated with a TAG.

The time alignment timer may correspond to one subTAG. For example, the time alignment timer may control a time at which the MAC entity considers one or multiple serving cells to belong to a subTAG. For example, the time alignment timer may control a time at which the MAC entity considers one or multiple TRPs to belong to a subTAG.

The MAC entity may perform some or all of first to fourth processes.

In the first process, in a case that a Timing advance command MAC CE (TA command MAC CE) is received and N_{TA} is held by the indicated TAG, the MAC entity may apply the TA command for the indicated TA command. In the first process, in a case that a Timing advance command MAC CE (TA command MAC CE) is received and N_{TA} is held by the indicated TAG, the MAC entity may start or restart the time alignment timer associated with the indicated TA command. The time alignment timer may be timeAlignmentTimer.

The second process may be a process performed in a case that a TA command is received in a random access response (random access response message). The second process may be a process in a case that a TA command is received in a message B (MSGB). The second process may be a process in one serving cell belonging to one TAG (or subTAG). The second process may be a process in the SPCell. In the second process, in a case that a random access preamble is not selected from preambles in a Contention-based random access (CBRA), the MAC entity may apply a TA command for one TAG (or subTAG) and may start or restart a time alignment timer associated with one TAG (or subTAG). A TA command may be received by a random access response.

In the second process, in a case that the time alignment timer associated with one TAG (or subTAG) is not running, the MAC entity may apply a TA command for one TAG (or subTAG) and may start the time alignment timer. Further, in a case that a contention resolution has not been completed successfully, the MAC entity may stop the time alignment timer.

In the second process, in a case that the random access preamble is selected from the preamble in the CBRA and in a case that the time alignment timer associated with one TAG (or subTAG) is running, the MAC entity may ignore the received TA command.

In the third process, in a case that an Absolute Timing Advance (TA) Command is received for a message A (MSGA) transmission including a C-RNTI MAC CE, the MAC entity may apply the absolute TA Command for the PTAG and may start or restart the time alignment timer associated with the PTAG.

The fourth processing may be a process in a case that a time alignment timer is expired. In the fourth process, in a case that the time alignment timer is associated with the PTAG (or the subTAG associated with the first TRP), the MAC entity may perform some or all of first to seventh sub-operations. The first sub-operation may be to flush all HARQ buffers for all serving cells. The second sub-operation may be to notify the RRC that PUCCHs for all serving cells are released. The third sub-operation may be to notify the RRC that SRSs for all serving cells are released. The fourth sub-operation may be to clear the configured downlink assignment and the configured uplink grant. The fifth sub-operation may be to clear PUSCH resources for semi-persistent CSI reporting. The sixth sub-operation may be to consider that all time alignment timers are expired. The seventh sub-operation may be to maintain N_{TA} for all TAGs (or subTAGs). In other words, in a case that the time alignment timer is expired (is not running), the MAC entity need not change N_{TA}. In the fourth process, in a case that the time alignment timer is associated with the STAG (or the subTAG associated with the second TRP), the MAC entity may perform some or all of eighth to thirteenth sub-operations. The eighth sub-operation may be to flush all HARQ buffers for the serving cells belonging to this TAG (or this subTAG). The ninth sub-operation may be to notify the RRC that PUCCHs for the serving cells belonging to this TAG (or this subTAG) are released. The tenth sub-operation may be to notify the RRC that SRSs for the serving cells belonging to this TAG (or this subTAG) are released. The eleventh sub-operation may be to clear the configured downlink assignments and the configured uplink grants for the serving cells belonging to this TAG (or this subTAG). The twelfth sub-operation may be to clear PUSCH resources for semi-persistent CSI reporting for the serving cells belonging to this TAG (or this subTAG). The thirteenth sub-operation may be to maintain N_{TA} for this TAG (or this subTAG).

The HARQ buffer may store a MAC PDU to transmit. One HARQ buffer may be associated with one HARQ process. One HARQ process may correspond to one HARQ process ID. The fact that the HARQ buffer is flushed may mean that the HARQ buffer becomes empty. In a case that a HARQ entity requests an initial transmission (new transmission) for one transport block, the HARQ process may store the MAC PDU in the associated HARQ buffer.

In a case that the MAC entity stops uplink transmission for the SCell because a Maximum uplink transmission timing difference is exceeded, the MAC entity may consider the time alignment timer is expired. The time alignment timer may be a time alignment timer associated with the SCell. In a case that a difference between the first TA associated with the first TRP and the second TA associated with the second TRP exceeds the maximum uplink transmission timing difference, the MAC entity may stop uplink transmissions associated with one or both of the first TA and the second TA. In a case that the MAC entity stops the uplink transmission, the MAC entity may consider that the time alignment timer is expired.

In a case that the time alignment timer is expired, the MAC entity need not perform the uplink transmission. In a case that the time alignment timer is not running, the MAC entity need not perform the uplink transmission. This uplink transmission need not include the random access preamble transmission. This uplink transmission need not include the message A transmission. This uplink transmission may be uplink transmission on one serving cell. This uplink transmission may be uplink transmission on one TRP. This time alignment timer may be a time alignment timer associated with a TAG to which one serving cell belongs. This time alignment timer may be a time alignment timer associated with a subTAG to which one serving cell belongs. This time alignment timer may be a time alignment timer associated with a subTAG to which one TRP belongs.

In a case that the time alignment timer associated with one subTAG is expired, the MAC entity need not perform the uplink transmission for one or multiple TRPs included in the one subTAG. This uplink transmission need not include one or both of the random access preamble transmission and the message A transmission. For example, in a case that the time alignment timer associated with one TRP is expired, the MAC entity need not perform the uplink transmission for the one TRP.

In a case that the time alignment timer associated with the PTAG is not running, the MAC entity need not perform the uplink transmission on any serving cell. This uplink transmission need not include a random access preamble transmission on the SPCell. This uplink transmission need not include the message A transmission on the SPCell.

A MAC Protocol Data Unit (PDU) may be a bit string arranged in 1 byte. The MAC PDU may be a transport block. For example, the MAC PDU may include one or multiple MAC subPDUs. Each MAC subPDU may include one MAC subheader. Each MAC subPDU may include one MAC subheader and one MAC ServiceData Unit (SDU). Each MAC subPDU may include one MAC subheader and one MAC Control Element (CE). Each MAC subPDU may include one MAC header and padding. The MAC SDU may be data from a higher layer. The MAC SDU may be data to a higher layer.

The TA command may be a MAC CE. The TA command may be included in a MAC CE. For example, the TA command may be included in a TA command MAC CE. The TA command MAC CE may include a TAG ID and a TA command. The TAG ID may indicate one or both of one TAG and one subTAG. The TAG including the SpCell may correspond to a TAG ID 0. The TAG ID may be indicated by 2 bits. The TAG ID may indicate one subTAG. The TAG ID may indicate one TRP. The TA command may indicate T_{A}. T_{A} may be an integer from 0 to 63. T_{A} may be used for controlling an amount of the timing adjustment. The timing adjustment may be applied by the MAC entity. The TA command may be indicated by 6 bits. The TA command MAC CE may be identified by a MAC subheader with a certain Logical channel ID (LCID). The certain LCID may be an LCID corresponding to an index of 61.

The TA command may be included in an absolute Timing advance command MAC CE (absolute TA command MAC CE). The absolute TA command MAC CE may include a reserved bit and a TA command. The TA command may indicate an index value of T_{A}. T_{A} field may be used for controlling the amount of the timing adjustment. The TA command may be indicated by 12 bits. A size the reserved bit may be 4 bits. The reserved bit may be set to a value of 0. The absolute TA command MAC CE may include at least the TAG ID. The TAG ID may indicate one subTAG. The TAG ID may indicate one TRP. The absolute TA command MAC CE may be identified by a MAC subheader with a certain eLCID. The certain eLCID may be an eLCID corresponding to an index of 316.

The TA command may be included in a random access response. For example, the TA command may be included in a MAC payload of the random access response. For example, the TA command may indicate the index value of T_{A}. T_{A} field may be used for controlling the amount of the timing adjustment. A size of the TA command field may be 12 bits. The random access response may include a TA command, an uplink grant, and a Temporary C-RNTI. The uplink grant may indicate resources to be used in the uplink. A size of the uplink grant field may be 27 bits. The Temporary C-RNTI may indicate a temporary identifier used by the MAC entity during random access. A size of the Temporary C-RNTI field may be 16 bits. The random access response may be a MAC RAR. For example, the random access response may be a fallbackRAR. The TA command may be included in the message B (MSGB). For example, the TA command may be included in the MAC payload of the message B. The TA command may be included in a successRAR. The random access response grant may include the TRP information. For example, the TA corresponding to one TRP identified by the TRP information may be indicated by the TA command included in the random access response. The random access response may include an index of a CORSET resource pool as the TRP information.

Multiple TA commands may be indicated by one random access response. For example, in a case that two TA commands are transmitted in one random access response, the TA commands for respective TRP may be indicated by a first TA command and a second TA command. At this time, the first TA command and the second TA command may be indicated by different fields included in the random access response. The first TA command and the second TA command may be indicated by one field included in the random access response, and the first TA command and the second TA command corresponding to a value (bit string, index) of the field may be associated with each other (joint coding). The second TA command may be defined by a difference from the first TA command.

The random access (or random access procedure) may be initiated by the MAC entity. The random access may be initiated by a PDCCH order (or a PDCCH). The random access may be initiated by an RRC. The random access in the SCell may be initiated by the PDCCH order. The random access may also be triggered by the MAC entity. The random access may be triggered by the PDCCH order. The random access may be triggered by the RRC.

For example, the random access may be triggered (initiated) by a certain event. For example, the certain event may be an initial access from the RRC_IDLE state. For example, the certain event may be an RRC connection re-establishment procedure. For example, the certain event may be an arrival of uplink or downlink data during the RRC_CONNECTED state in a case that an uplink synchronization state is 'non-synchronized'. For example, the certain event may be an uplink data arrival during the RRC_CONNECTED state in a case that there is no PUCCH resource. For example, the certain event may be a failure of a scheduling request. For example, the certain event may be a request by the RRC in response to a handover. For example, the certain event may be RRC connection Resume. For example, the certain event may be establishing time alignment. For example, the certain event may be establishing time alignment for an STAG. For example, the certain event may be establishing time alignment for a TRP. For example, the certain event may be requesting the Other SI. For example, the certain event may be beam failure recovery. For example, the certain event may be acquisition of a TA.

The random access (random access type) may be a 4-step random access (4-step random access type). The random access (random access type) may be a 2-step random access (2-step random access type. The random access may support a Contention-based Random access (CBRA). In other words, the random access may be a CBRA. The random access may support Contention-free random access (CFRA). In other words, the random access may be a CFRA. For example, the random access may be a 4-step random access type CBRA. For example, the random access may be a 4-step random access type CFRA. For example, the random access may be a 2-step random access type CBRA. For example, the random access may be a 2-step random access type CFRA.

In the 4-step random access type CBRA, the terminal apparatus 1 may transmit the message 1 (random access preamble), receive the message 2 (random access response), transmit the message 3, and receive the message 4 (contention resolution). In the 2-step random access type CBRA, the terminal apparatus 1 may transmit the message A (random access preamble and PUSCH payload) and receive the message B (contention resolution). In the 4-step random access type CFRA, the terminal apparatus 1 may receive a random access preamble assignment, transmit a random access preamble, and receive a random access response. In the 2-step random access type CFRA, the terminal apparatus 1 may receive a random access preamble and PUSCH assignment, transmit a random access preamble and a PUSCH, and receive a random access response.

In a case that a CFRA resource is not configured, a Reference signal received power (RSRP) threshold may be used to select one of the 2-step random access type and the 4-step random access type. In a case that the CFRA resource of the 4-step random access type is configured, the terminal apparatus 1 may perform a random access of the 4-step random access type. In a case that the CFRA resource of the 2-step random access type is configured, the terminal apparatus 1 may perform a random access of the 2-step random access type.

The message 1 may include one preamble in the PRACH. After transmitting the message 1, the terminal apparatus 1 may monitor one response (random access response) within a configured window. In the CFRA, a dedicated preamble may be assigned. In the CFRA, the terminal apparatus 1 may end the random access in response to receiving the random access response. In the CBRA, the terminal apparatus 1 may transmit the message 3 in response to receiving the random access response. For example, the terminal apparatus 1 may transmit the message 3 by using an uplink grant (random access response grant). In the CBRA, the terminal apparatus 1 may monitor the message 4 (contention resolution). In a case that the contention resolution after the transmission of the message 3 is not successful, the terminal apparatus 1 may transmit the message 1.

The message A may include one preamble on the PRACH. The message A may also include a payload in the PUSCH. After the transmission of the message A, the terminal apparatus 1 may monitor one response within the configured window. In the CFRA, a dedicated preamble and a PUSCH resource for message A transmission may be assigned. In the CFRA, the terminal apparatus 1 may end the random access in response to receiving one response. In the CBRA, in a case that the contention resolution is successful, the terminal apparatus 1 may end the random access. In a case that a fallback indication is received in the message B, the terminal apparatus 1 may transmit the message 3 based on the fallback indication and monitor the contention resolution. In a case that the contention resolution after the transmission of the message 3 is not successful, the terminal apparatus 1 may transmit the message A. In a case that the random access of the two-step random access type is not completed, the terminal apparatus 1 may be configured to switch to the CBRA of the 4-step random access type.

In the MAC entity, there may be one random access that can proceed simultaneously. In a case that a first random access is proceeding and in a case that a second random access is triggered, the terminal apparatus 1 may continue the first random access. In the case that the first random access is proceeding and in the case that the second random access is triggered, the terminal apparatus 1 may initiate the second random access.

The RRC may configure some or all of first to eighth higher layer parameters for random access. A first set of PRACH occasions for message 1 (random access preamble) transmission may be configured by the first higher layer parameter. The first set may be used for a message A PRACH. The second set of PRACH occasions for random access preamble transmission for the message A may be configured by the second higher layer parameter. The PRACH occasion may be referred to as an RA occasion. The PRACH occasion may be referred to as an RACH occasion.

A random access preamble power may be configured by the third higher layer parameter. For example, the first (initial) random access preamble power may be configured by the third higher layer parameter.

The RSRP threshold may be configured by the fourth higher layer parameter. For example, the RSRP threshold may be an RSRP threshold for SS/PBCH block selection or CSI-RS selection. For example, the RSRP threshold may be an RSRP threshold for selection between two uplink carriers. The two uplink carriers may be a Normal Uplink (NUL) and a Supplementary Uplink (SUL).

The maximum number of transmissions of one or both of the message 1 and the message A may be configured by the fifth higher layer parameter. One or both of the message 1 and the message A may change the transmission power for each transmission. For example, the power of one or both of the message 1 and the message A may be changed based on the sixth higher layer parameter. The sixth higher layer parameter may be a power ramping factor.

The random access preamble may be configured by the seventh higher layer parameter. For example, the index of the random access preamble used in the PRACH occasion may be configured by the seventh higher layer parameter. The seventh higher layer parameter may indicate any value from 0 to 63.

The number of SS/PBCH blocks mapped to each PRACH occasion may be defined by the eighth higher layer parameter. The number of CBRA random access preambles mapped to each SS/PBCH block may be defined by the eighth higher layer parameter. The CBRA random access preamble may be a Contention-based Random Access Preamble. Transmission of one or both of the message 1 and the message A may use a random access preamble corresponding to a group A or a group B. For example, the terminal apparatus 1 may perform message A transmission using a random access preamble group A. For example, the terminal apparatus 1 may perform message A transmission using a random access preamble group B.

In a case that a random access (random access procedure) is initiated in one serving cell, the MAC entity may flush a message 3 buffer, flush a message A buffer, select a carrier for performing the random access, determine a random access type, and perform a random access resource selection procedure.

The MAC entity may determine the power based on the counter for each random access type. The MAC entity may calculate the RA-RNTI associated with the PRACH occasion in which the random access preamble is transmitted. The MAC entity may indicate the physical layer to transmit the random access preamble using the selected PRACH occasion. The RA-RNTI associated with the PRACH occasion may be calculated based on some or all of an index of the first OFDM symbol of the PRACH occasion, an index of the first slot of the PRACH occasion in one system frame, an index of the PRACH occasion in the frequency domain, and an uplink carrier on which the random access preamble is transmitted.

The MAC entity may start a first window from the end of the random access preamble transmission. The random access preamble may be a Contention-free Random Access (CFRA) Preamble. The random access preamble may be a Contention-based Random Access (CBRA) Preamble. The MAC entity may monitor a PDCCH for a random access response. For example, while the first window is running, the MAC entity may monitor the PDCCH. The PDCCH may be a PDCCH in the SpCell. A notification of PDCCH reception may be received from the physical layer. PDCCH transmission may be addressed to the C-RNTI. In a case that the CFRA random access preamble is transmitted by the MAC entity, the MAC entity may consider that the random access has been completed successfully.

A valid downlink assignment may be received on the PDCCH corresponding to the RA-RNTI. The received transport block may be decoded. The random access response may include a certain MAC subPDU. The certain MAC subPDU may include a random access preamble ID. Based at least on the random access response including the certain MAC subPDU, the MAC entity may consider that the random access response has been received successfully.

The MAC entity may consider that the random access response has been received successfully. Based at least on the random access response being considered to have been received successfully, the MAC entity may consider that the random access has been completed successfully, may indicate a reception of an acknowledgement (ACK) to the higher layer, and may apply the received TA command. For example, the MAC entity may process a value of the received UL grant. For example, the MAC entity may indicate the received UL grant to the physical layer.

In the case that the random access response is considered to have been received successfully and in a case that the random access preamble is transmitted on one serving cell, the MAC entity may process the TA command for one serving cell. Based at least on the random access response being considered to have been received successfully, and the random access preamble being transmitted on one serving cell, the MAC entity may apply the TA command for the one serving cell. Based at least on the random access response being considered to have been received successfully, the MAC entity may apply the TA command for one TRP. For example, in a case that the MAC PDU includes a TA command (e.g., absolute TA command MAC CE), the MAC entity may process the TA command. For example, the MAC PDU may be included in a transport block. For example, one or multiple MAC SDUs may be multiplexed with the transport block. For example, one or multiple MAC SDUs may be demultiplexed from the transport block.

Before initiating the random access (physical random access procedure), the physical layer may receive a set of SS/PBCH block indices from the higher layers and may provide a set of RSRP measurements to the higher layers. Before initiating the random access, the physical layer may indicate the higher layer to perform a type 1-random access. Before initiating the random access, the physical layer may indicate the higher layer to perform a type 2-random access. The type-1 random access may be a random access of the 4-step random access type. The type-2 random access may be a random access of the 2-step random access type. Before initiating random access, the physical layer may receive one or multiple parameters from higher layers. One or multiple parameters may include a configuration of PRACH transmission parameters. The PRACH transmission parameter may be a PRACH preamble format, time resource, or frequency resource for the PRACH transmission. One or multiple parameters may include a parameter for determining a root sequence. One or multiple parameters may include a parameter for determining a cyclic shift in a PRACH preamble sequence (random access preamble sequence). One or multiple parameters may include the TRP information. For example, one random access preamble may be associated with one TRP.

The random access may include at least transmission of the message 1 on the PRACH and the message 2. The random access may include transmission of the message 1 on the PRACH, the message 2, transmission of a PUSCH scheduled by a random access response grant (Random access response uplink grant), and a PDSCH for the contention resolution. The message 1 may be a random access preamble. The message 2 may be a random access response message (random access response). For example, the message 2 may be a random access response with a PDCCH/PDSCH. The random access procedure may be referred to as a random access.

The random access may include at least transmission of the message A and reception of the message B. The random access may include transmission of the message A, reception of the message B, transmission of a PUSCH scheduled by a random access response grant, and a PDSCH for the contention resolution. The message A may be a random access preamble in a PRACH and a PUSCH. The message B may be a random access response. For example, the message B may be a random access response with a PDCCH/PDSCH. The random access response grant may be a fallback random access response grant.

In a case that the random access is initiated by the PDCCH order, the PRACH transmission (random access preamble transmission) may involve the same subcarrier spacing as the PRACH transmission initiated by the higher layer. In a case that two uplink carriers are configured in one serving cell, and in a case that the terminal apparatus 1 detects the PDCCH order, the terminal apparatus 1 may use value of a UL/SUL indicator field from the detected PDCCH order in order to determine one uplink carrier for the PRACH transmission. In a case that N TRPs are configured in one serving cell, and in a case that the terminal apparatus 1 detects the PDCCH order, the terminal apparatus 1 may use one field (or a value of the field) of the detected PDCCH order in order to determine one TRP for the PRACH transmission.

The random access may be triggered by the higher layer or the PDCCH order in response to a request for PRACH transmission. The configuration by the higher layer for the PRACH transmission may include some or all of the configuration for the PRACH transmission, the preamble index (index of the random access preamble), the preamble SCS (subcarrier spacing of the random access preamble), the RA-RNTI, the PRACH resource, and the TRP information.

The random access preamble may be a contention-based preamble. The random access preamble may be a contention-free preamble. The number of contention-based preambles per valid PRACH occasion and per SS/PBCH block index may be configured by a higher layer parameter. The PRACH occasion may be valid. For example, the PRACH occasion may be valid based at least on an OFDM symbol configured for time division duplexing.

The terminal apparatus 1 may attempt to decode the DCI format 1_0 with the CRC scrambled with the RA-RNTI. For example, in response to the PRACH transmission, the terminal apparatus 1 may attempt to decode the DCI format 1_0 with the CRC scrambled with the RA-RNTI in a certain window. The certain window may be started based at least on the first OFDM symbol of the CORESET.

Based at least on the terminal apparatus 1 detecting the DCI format 1_0 with the CRC scrambled with the RA-RNTI and the terminal apparatus 1 receiving a transport block, the terminal apparatus 1 may pass the transport block to the higher layer. For example, the transport may be received on a PDSCH within the certain window. The higher layer may parse a transport block corresponding to a random access preamble identity (random access preamble ID, RAPID) associated with the PRACH transmission. In a case that the higher layer identifies the RAPID in the random access response (random access response message), the higher layer may indicate an uplink grant (random access response grant) to the physical layer. The random access response may be a random access response of a transport block. The random access response grant may be a random access response uplink grant.

In a case that the terminal apparatus 1 does not detect the DCI format 1_0 with the CRC scrambled with the RA-RNTI in the window or in a case that the terminal apparatus 1 does not receive the transport block on the PDSCH in the window, the higher layer may indicate the physical layer to transmit the PRACH. In a case that the higher layer does not identify the RAPID associated with the PRACH transmission, the higher layer may indicate the physical layer to transmit the PRACH. For example, the terminal apparatus 1 may be expected to transmit the PRACH by a predetermined time after the last OFDM symbol of the window. The terminal apparatus 1 may be expected to transmit the PRACH by a predetermined time after the last OFDM symbol of the PDSCH reception. The transmission of the PRACH may mean transmission of a random access preamble.

The PDCCH order may trigger a Contention-free random access procedure (CFRA). For example, the PDCCH order may trigger a CFRA on one SPCell. The PDCCH order may initiate a PRACH transmission. In a case that the terminal apparatus 1 attempts to detect the DCI format 1_0 with the CRC scrambled with the RA-RNTI in response to the PRACH transmission initiated by the PDCCH order, it may be assumed that the PDCCH including the DCI format 1_0 and the PDCCH have the QCL property of the same DMRS antenna port. The QCL property may be the large scale property of the channel.

The random access response grant may include one or multiple fields. For example, one or multiple fields may include a frequency hopping flag field. For example, one or multiple fields may include a frequency domain resource assignment field (or a PUSCH frequency resource assignment field). For example, one or multiple fields may include a time domain resource assignment field (or a PUSCH time resource assignment field). For example, one or multiple fields may include a Transmission power control (TPC) command field. For example, one or multiple fields may include a CSI request field. For example, one or multiple fields may include a field with the TRP information.

In order to improve the degree of freedom of the terminal position, reduce the interference, expand the coverage, and the like, it is a problem that the terminal apparatus 1 determines the uplink timing for each of multiple transmission and reception points. For example, Means 1 and Means 1a may be used to solve this problem.

Hereinafter, Means 1 according to an aspect of the present embodiment will be described.

The terminal apparatus 1 may transmit a first random access preamble 9010 in a first random access 9000. The terminal apparatus 1 may receive a first random access response 9020 in the first random access 9000. The terminal apparatus 1 may transmit a random access preamble 9011 in a second random access 9001. The terminal apparatus 1 may receive a second random access response 9021 in the second random access 9001. For example, in a case that the first random access 9000 is initiated (triggered), the terminal apparatus 1 may transmit the first random access preamble 9010 and may receive the first random access response 9020. In a case that the second random access 9001 is initiated (triggered), the terminal apparatus 1 may transmit the second random access preamble 9011 and may receive the second random access response 9021.

The terminal apparatus 1 may transmit the first random access preamble 9010 based at least on first TRP information 9030. For example, the random access preamble 9010 may correspond to a first TRP 9040. The terminal apparatus 1 may receive the first random access response 9020 including the first TRP information 9030. The terminal apparatus 1 may transmit the second random access preamble 9011 based at least on second TRP information 9031. For example, the second random access preamble 9011 may correspond to a second TRP 9041. The terminal apparatus 1 may receive the second random access response 9020 including the second TRP information 9031. For example, the first random access preamble 9010 to be transmitted to the first TRP 9040 may be indicated by the first higher layer parameter. For example, the second random access preamble 9011 to be transmitted to the second TRP 9041 may be indicated by the second higher layer parameter. The first higher layer parameter may be the same as the second higher layer parameter.

The random access response may include a TA command. For example, the first random access response 9020 may include a first TA command 9050. For example, the second random access response 9021 may include a second TA command 9051. The first TA command 9050 may be different from the second TA command 9051. In other words, the first TA command 9050 may be independent of the second TA command 9051. The terminal apparatus 1 may receive the first TA command 9050. The terminal apparatus 1 may receive the second TA command 9051.

A first TA 9060 may be determined based on the first TA command 9050. In other words, a first uplink timing 9070 may be determined based on the first TA command 9050. The first uplink timing 9070 may be an uplink timing between the terminal apparatus 1 and the first TRP 9040. A second TA 9061 may be determined based on the second TA command 9051. In other words, a second uplink timing 9071 may be determined based on the second TA command 9051. The second uplink timing 9071 may be an uplink timing between the terminal apparatus 1 and the second TRP 9041. The uplink timing may be a TA.

The first TA 9060 may correspond to a first subTAG 9200. The second TA 9061 may correspond to a second subTAG 9201. The first subTAG 9200 may correspond to a first TAG ID 9300. The second subTAG 9201 may correspond to a second TAG ID 9301.

The first TRP 9040 may be different from the second TRP 9041. The first TRP 9040 and the second TRP 9041 may be configured by a higher layer parameter. The first TRP 9040 and the second TRP 9041 may be determined by a higher layer parameter. In a case that the higher layer parameter is not configured, it may be assumed that there is no second TRP 9041. The first TRP 9040 may be identified by a first ID (or index). The second TRP 9041 may be identified by a second ID (or index). The first ID and the second ID may be configured by a higher layer parameter. The first ID and the second ID may be included in the DCI format. The first ID and the second ID may be included in the random access response.

The base station apparatus 3 may include the first TRP 9040 and the second TRP 9041. For example, the base station apparatus 3 may include two transmission and/or reception points (base station apparatus 3a and base station apparatus 3b). The first TRP 9040 may be a transmission and/or reception point of the base station apparatus 3a. The second TRP 9041 may be a transmission and/or reception point of the base station apparatus 3b. The base station apparatus 3a may have a function of the base station apparatus 3 or may be independent of the base station apparatus 3b. The base station apparatus 3b may have the function of the base station apparatus 3 or may be independent of the base station apparatus 3a. For example, the base station apparatus 3a need not be synchronized with the base station apparatus 3b. The TRP information may be used to select one of the base station apparatus 3a and the base station apparatus 3b.

The first TA command 9050 and the second TA command 9051 may be applied to one serving cell. For example, the first TA command 9050 and the second TA command 9051 may be simultaneously applied to one serving cell. For example, the first TA command 9050 and the second TA command 9051 may be received on one serving cell. For example, the first TA command 9050 and the second TA command 9051 may be TA commands for one serving cell. For example, the first TA command 9050 and the second TA command 9051 may be TA commands for one TAG. For example, the first TA command 9050 and the second TA command 9051 may be TA commands for one time alignment timer. In other words, the first TA command 9050 and the second TA command 9051 may be TA commands for one time alignment timer associated with one TAG.

The first TA 9060 and the second TA 9061 may be applied to one serving cell. For example, the first TA 9060 and the second TA 9061 may be received on one serving cell. For example, the first TA 9060 and the second TA 9061 may be TAs for one serving cell. In other words, the terminal apparatus 1 may use the first TA 9060 and the second TA 9061 on one serving cell. The first TA 9060 need not be updated (changed) based on the second TA command 9051. The second TA 9061 need not be updated (changed) based on the first TA command 9050.

The first uplink timing 9070 and the second uplink timing 9071 may be applied to one serving cell. For example, the first uplink timing 9070 and the second uplink timing 9071 may be received on one serving cell. For example, the first uplink timing 9070 and the second uplink timing 9071 may be uplink timings for one serving cell. In other words, the terminal apparatus 1 may use the first uplink timing 9070 and the second uplink timing 9071 on one serving cell. The first uplink timing 9070 need not be updated (changed) based on the second TA command 9051. The second uplink timing 9071 need not be updated (changed) based on the first TA command 9050.

The terminal apparatus 1 may switch between the first uplink timing 9070 and the second uplink timing 9071. For example, the terminal apparatus 1 may use one of the first uplink timing 9070 and the second uplink timing 9071 for transmission of one uplink physical channel on one serving cell. For example, the terminal apparatus 1 may associate one of the first uplink timing 9070 and the second uplink timing 9071 with one uplink physical channel transmission based on the TRP information. For example, the terminal apparatus 1 may associate one of the first uplink timing 9070 and the second uplink timing 9071 with one uplink physical channel transmission based on the subTAG. For example, the terminal apparatus 1 may associate one of the first uplink timing 9070 and the second uplink timing 9071 with one uplink physical channel transmission based on an indication from a higher layer (for example, the MAC layer). For example, the terminal apparatus 1 may select one of the first uplink timing 9070 and the second uplink timing 9071. For example, the terminal apparatus 1 may select one of the first uplink timing 9070 and the second uplink timing 9071 based on certain information. The certain information may be one of the TRP information and the subTAG. The terminal apparatus 1 may receive certain information or a parameter including certain information. The parameter including the certain information may be one of a higher layer parameter or a DCI format.

Switching between the first uplink timing 9070 and the second uplink timing 9071 may be switching between a first uplink frame 9080 and a second uplink frame 9081. This switching may be referred to as TA switching. This switching may be indicated by the DCI format. The TA switching may be triggered based on transmission of the uplink physical channel being indicated. The TA switching may be performed spending a predetermined time 9090. For example, the TA switching may be completed a predetermined time 9090 after a first time position. The first time position may be the last OFDM symbol of the PDCCH to which the DCI format indicating the TA switching is mapped. In a case that the TA switching switches from the first uplink timing 9070 to the second uplink timing 9071, the first time position may be the last OFDM symbol of the latest uplink physical channel corresponding to the first uplink timing 9070. In the case that the TA switching switches from the first uplink timing 9070 to the second uplink timing 9071, the first time position may be the last OFDM symbol of the PDCCH to which the DCI format is mapped that indicates transmission of the uplink physical channel corresponding to the second uplink timing 9071 (or schedules the uplink physical channel). The predetermined time 9090 may be defined by any of time units, a real time (e.g., milliseconds, seconds), the number of OFDM symbols, and the number of slots. The predetermined time 9090 may be determined based on some or all of the maximum propagation delay difference, the maximum uplink transmission timing difference, the CP, the UE capability, the frequency range, and the higher layer parameter. For example, the predetermined time 9090 may be 14 OFDM symbols.

The terminal apparatus 1 may transmit a first uplink physical channel 9100 corresponding to the first uplink timing 9070 and a second uplink physical channel 9101 corresponding to the second uplink timing 9071 on one serving cell. The first uplink physical channel 9100 may be the same as the second uplink physical channel 9101. For example, the second uplink physical channel transmission 9101 may be a repetition of the first uplink physical channel transmission 9100. In other words, the terminal apparatus 1 may simultaneously transmit one uplink corresponding to the first uplink timing 9070 and the second uplink timing 9071 on one serving cell.

Simultaneous Transmission with Multi panel (STxMP) may be applied to the terminal apparatus 1. The Simultaneous Transmission with Multi panel (STxMP) may be applied for the first uplink physical channel 9100 and the second uplink physical channel 9101. In a case that the STxMP is applied, the terminal apparatus 1 may simultaneously transmit the first uplink physical channel 9100 and the second uplink physical channel 9101. In a case that the STxMP is applied, the terminal apparatus 1 may transmit the first uplink physical channel 9100 and the second uplink physical channel 9101 in the same time resource and the same frequency resource. In the case that the STxMP is applied, a first Code Division Multiplexing (CDM) group of a first DMRS port indicated for the first uplink physical channel 9100 may be different from a second CDM group of a second DMRS port indicated for the second uplink physical channel 9101. The first CDM group and the second CDM group need not be expected to be the same. One or both of the first DMRS port and the second DMRS port may be indicated by an antenna port field in one DCI format. The first CDM group and the second CDM group may be indicated by the antenna port field. In the case that the STxMP is applied, the first uplink physical channel 9100 and the second uplink physical channel 9101 may correspond to one pre-coding matrix. One precoding matrix may be determined by a TPMI field in the DCI format. In the case that the STxMP is applied, the first uplink physical channel 9100 may correspond to a first TCI state, and the second uplink physical channel 9101 may correspond to a second TCI state. The first TCI state and the second TCI state may be indicated by a Transmission Configuration Indication (TCI) field in the DCI format 1_1/1_2. In the case that the STxMP is applied, the first uplink physical channel 9100 may correspond to a first uplink transmission spatial filter (UL Tx Spatial filter), and the second uplink physical channel 9101 may correspond to a second uplink transmission spatial filter. The first uplink transmission spatial filter may be determined by an SRS resource indication (SRI) field in the DCI format. The second uplink transmission spatial filter may be determined by a Second SRI field in the DCI format.

In the case that the STxMP is applied, the first number of transmission layers (the number of ranks) corresponding to the first uplink physical channel 9100 may be the same as or different from the second number of transmission layers (the number of ranks) corresponding to the second uplink physical channel 9101. A difference between the first number of transmission layers and the second number of transmission layers need not be expected to be greater than or equal to 2. In the case that the STxMP is applied, the first uplink physical channel 9100 and the second uplink physical channel 9101 may be fully overlapped. In the case that the STxMP is applied, the first uplink physical channel 9100 and the second uplink physical channel 9101 need not be expected to be partially overlapped. In the case that the STxMP is applied, a first transport block corresponding to the first uplink physical channel 9100 and a second transport block corresponding to the second uplink physical channel 9101 need not be expected to be different from each other. In the case that the STxMP is applied, each of the first uplink physical channel 9100 and the second uplink physical channel 9101 need not be expected to convey two transport blocks (codewords). In the case that the STxMP is applied, a higher layer parameter sfnSchemePusch or a higher layer parameter sfnSchemePucch need not be expected to be configured for one or both of the first uplink physical channel 9100 and the second uplink physical channel 9101. In a case that the higher layer parameter sfnSchemePusch is configured for a certain PUSCH, a DMRS port of the certain PUSCH may be QCLed with a reference signal in multiple (e.g., two) TCI states. In a case that the higher layer parameter sfnSchemePucch is configured for a certain PUCCH, a DMRS port of the certain PUCCH may be QCLed with reference signals in multiple (e.g., two) TCI states.

In the case that the STxMP is applied, the first TA 9060 corresponding to the first uplink physical channel 9100 may be the same (or have the same value) as the second TA 9061 corresponding to the second uplink physical channel 9101. In a case that the first TA 9060 corresponding to the first uplink physical channel 9100 is different (or have a value different) from the second TA 9061 corresponding to the second uplink physical channel 9101, the STxMP need not be applied for the first uplink physical channel 9100 and the second uplink physical channel 9101. In a case that the first uplink physical channel 9100 is associated with the first uplink timing 9070 and the second uplink physical channel 9101 is associated with the second uplink timing 9071, the STxMP need not be applied for the first uplink physical channel 9100 and the second uplink physical channel 9101.

The STxMP being applied may be configured by a higher layer parameter. For example, the STxMP being applied for the PUSCH may be configured by a dedicated higher layer parameter for the PUSCH. For example, the STxMP being applied for the PUCCH may be configured by a dedicated higher layer parameter for the PUCCH. The STxMP being applied may be indicated by a DCI format.

The first random access 9000 may be a CBRA and the second random access 9001 may be a CFRA. For example, the second random access 9001 may be initiated (triggered) by the PDCCH order. One of first random access 9000 and second random access 9001 may be a CFRA. One of the first random access 9000 and the second random access 9001 may be initiated in the PDCCH order. For example, in a case that the second random access 9001 is a CFRA, then second random access response 9021 may correspond to the first TRP 9040. For example, in the case that the second random access 9001 is a CFRA, the second random access preamble 9011 may correspond to the second TRP 9041 and the second random access response may correspond to the first TRP 9040. In other words, the CFRA may be initiated to establish the second TA 9061. In other words, the CSS set need not be configured for the second TRP 9041.

The corresponding to the first TRP 9040 may be corresponding to any one of the first TRP information 9030, the first TA 9060, the first uplink timing 9070, the first subTAG 9200, and the first TAG ID 9300. The corresponding to the second TRP 9041 may be corresponding to any one of the second TRP information 9031, the second TA 9061, the second uplink timing 9071, the second subTAG 9201, and the second TAG ID 9301.

The first random access 9000 may be a first CBRA and the second random access 9001 may be a second CBRA. The first random access 9000 and the second random access 9001 need not be simultaneously performed. For example, the first random access 9000 may be based on some or all of a first SS/PBCH block index, a first SS/PBCH block, and a first SS/PBCH candidate. The second random access 9001 may be based on some or all of a second SS/PBCH block index, a second SS/PBCH block, and a second SS/PBCH candidate.

The first random access preamble 9010 may be transmitted to the first TRP. The second random access preamble 9011 may be transmitted to the second TRP. For example, the first random access preamble 9010 to be transmitted to the first TRP 9040 may be indicated by a higher layer parameter. For example, the second random access preamble 9011 to be transmitted to the second TRP 9041 may be indicated by a higher layer parameter.

One or both of the first TA 9060 and the first uplink timing 9070 may be determined based at least on the first TA offset 9400 and the first TA command 9050. One or both of the second TA 9061 and the second uplink timing 9071 may be determined based at least on the second TA offset 9401 and the second TA command 9051. The first TA offset 9400 may be the same as the second TA offset 9401. For example, the first TA offset 9400 and the second TA offset 9401 may be configured by one higher layer parameter. For example, in a case that one higher layer parameter is not provided, the terminal apparatus 1 may determine the first TA offset 9400 and the second TA offset 9401 as one value.

The first TA command 9050 may control an amount of a first timing adjustment (first uplink timing adjustment). The second TA command 9051 may control an amount of a second timing adjustment (second uplink timing adjustment). In other words, the first TA command 9050 may indicate a first T_{A}. The TA command 9051 may indicate a second T_{A}. The first T_{A} may be different from the second T_{A}.

In response to receiving the first TA command 9050, the terminal apparatus 1 may adjust (determine) the first uplink timing 9070 for the first uplink physical channel 9100 transmission. In response to receiving the second TA command 9051, the terminal apparatus 1 may adjust (determine) the second uplink timing 9071 for the second uplink physical channel 9101 transmission.

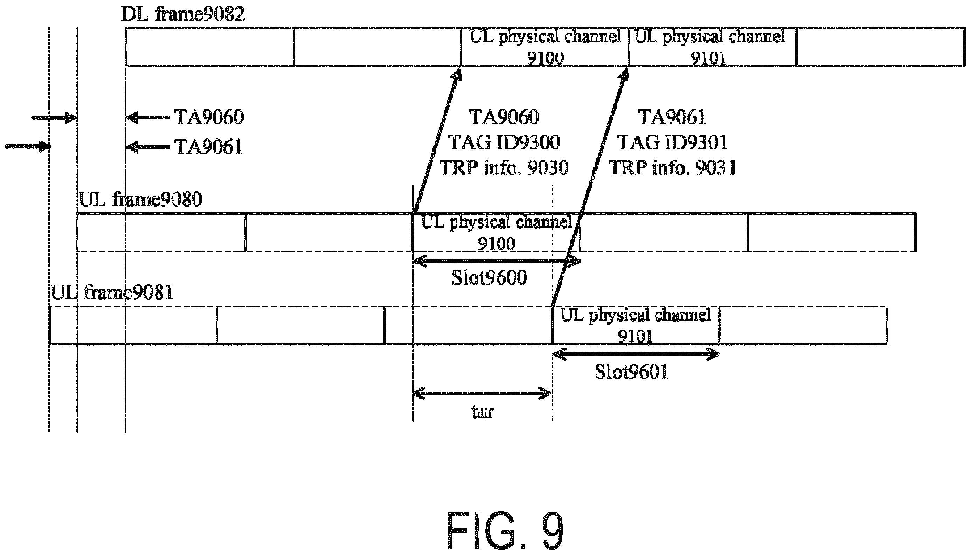

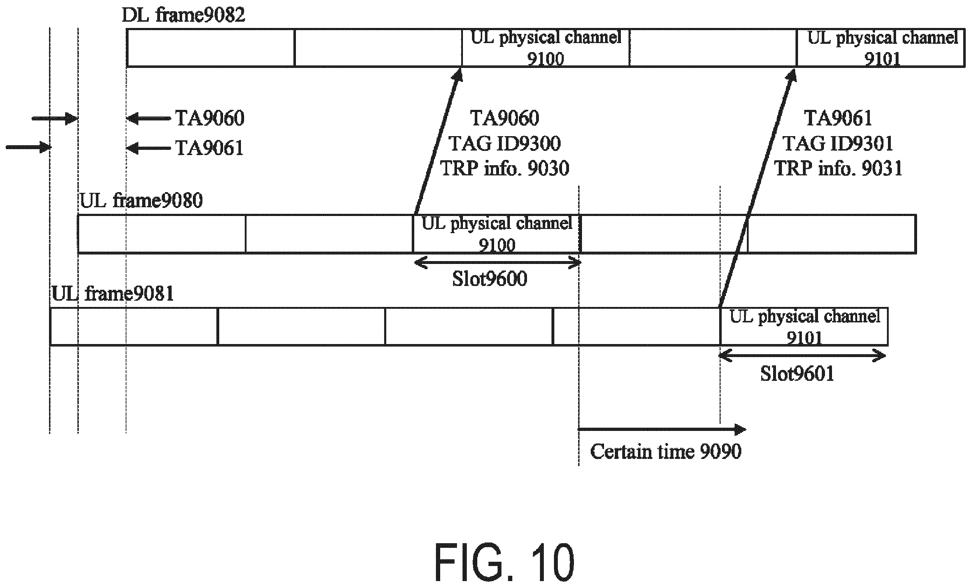

Hereinafter, Means 1a which is an extended function of Means 1 will be described. FIG. 9 is a diagram illustrating a first example of dropping in a second uplink according to an aspect of the present embodiment. FIG. 10 is a diagram illustrating a second example of dropping in the second uplink according to an aspect of the present embodiment.

In Means 1a, the second uplink physical channel 9101 need not be transmitted. For example, in Means 1a, the transmission of the second uplink physical channel 9101 need not be expected. In Means 1a, the second uplink physical channel 9101 may be dropped, canceled, or omitted.

Transmissions of the first uplink physical channel 9100 and the second uplink physical channel 9101 may be indicated on one serving cell.

The first uplink physical channel 9100 may be associated with some or all of the first TA 9060, the first TAG 9500, the first subTAG 9200, and the first uplink timing 9070. The second uplink physical channel 9101 may be associated with some or all of the second TA 9061, the second TAG 9501, the second subTAG 9201, and the second uplink timing 9071.

The first uplink physical channel 9100 may be transmitted in a first slot 9600. The second uplink physical channel 9101 may be transmitted in a second slot 9601. The first uplink physical channel 9100 may be transmitted in a first OFDM symbol 9700 in the first slot 9600. The second uplink physical channel 9101 may be transmitted in a second OFDM symbol 9701 in the second slot 9601. The first slot 9600 may be associated with the first uplink frame 9080. The second slot 9601 may be associated with the second uplink frame 9081. A first slot format determined for the first uplink frame 9080 may be different from a second slot format determined for the second uplink frame 9081.

The first uplink frame 9080 may precede the downlink frame 9082 by the first TA 9060. The second uplink frame 9081 may precede the downlink frame 9082 by the second TA 9061. The second uplink frame 9081 may precede the first uplink frame 9080.

The first slot 9600 may start earlier than the second slot 9601. The first slot 9600 may start earlier than the second slot 9601 by a time t_{dif}. The first uplink frame 9080 may precede the second uplink frame 9081 by the time t_{dif}. The time t_{dif} may be Tₛₗₒₜ + T_{TA, 1} - T_{TA, 2}. In a case that µ is 0, the length Tₛₗₒₜ of one slot may be 1 millisecond. T_{TA, 1} may be the first TA (or a value of the first TA) 9060. T_{TA, 2} may be the second TA (or a value of the first TA) 9061. The first slot 9600 may overlap with the second slot 9601. The overlapping may mean that the (value of) second TA 9061 is greater than the first (value of) TA 9060. The first slot 9600 may overlap with the second slot 9601 in the time domain. A duration between the last OFDM symbol in the first slot 9600 and the first OFDM symbol in the second slot 9601 may be within a predetermined time 9090. In the downlink frame, the first slot 9600 and the second slot 9601 may be consecutive.

The first uplink physical channel 9100 may be started earlier than the second uplink physical channel 9101. This earlier starting may mean that the second TA 9061 is greater than the first TA 9060. The first OFDM symbol of the first uplink physical channel 9100 may start earlier than the first OFDM symbol of the second uplink physical channel 9101 by the time t_{dif}. The first uplink physical channel 9100 may overlap with the second uplink physical channel 9101. The first uplink physical channel 9100 may overlap with the second uplink physical channel 9101 in the time domain. A duration between the last OFDM symbol of the first uplink physical channel 9100 and the last OFDM symbol of the second uplink physical channel 9101 may be within a predetermined time.

In FIG. 9, the first uplink physical channel 9100 may overlap with the second uplink physical channel 9101 in the time domain. For example, the second uplink physical channel 9101 may start before the end of the first uplink physical channel 9100. For example, the first OFDM symbol of the second uplink physical channel 9101 may precede the last OFDM symbol of the first uplink physical channel 9100. For example, a duration from the first OFDM symbol of the first uplink physical channel 9100 to the first OFDM symbol of the second uplink physical channel 9101 may be within the predetermined time 9090. For example, the predetermined time 9090 may be 14 OFDM symbols. For example, in a case that the number of OFDM symbols constituting the first uplink physical channel 9100 is N, the predetermined time 9090 may be N OFDM symbols.

In FIG. 10, the first uplink physical channel 9100 need not overlap with the second uplink physical channel 9101 in the time domain. For example, a duration from the last OFDM symbol of the first uplink physical channel 9100 to the first OFDM symbol of the second uplink physical channel 9101 may be within the predetermined time 9090. For example, a duration from the last OFDM symbol of the PDCCH conveying the DCI scheduling the first uplink physical channel 9100 to the first OFDM symbol of the second uplink physical channel 9101 may be within the predetermined time 9090. For example, the predetermined time 9090 may be 14 OFDM symbols. For example, the predetermined time 9090 may be determined based on some or all of the maximum propagation delay difference, the maximum uplink transmission timing difference, the CP, the UE capability, the frequency range, and the higher layer parameter.

A transmission of the first uplink physical channel 9100 may be indicated by a DCI format. The first uplink physical channel 9100 may be scheduled by the DCI format.

A transmission of the second uplink physical channel 9101 may be indicated by a DCI format. The second uplink physical channel 9101 may be scheduled by a DCI format. The transmission of the second uplink physical channel 9101 may be indicated by the configured uplink grant. The second uplink physical channel 9101 may be scheduled by a configured uplink grant. For example, the second uplink physical channel 9101 may correspond to the configured uplink grant.

The first uplink physical channel 9100 and the second uplink physical channel 9101 may be prioritized. For example, the second uplink physical channel 9101 may be prioritized over the first uplink physical channel 9100.

The STxMP being applied for the first uplink physical channel 9100 and the second uplink physical channel 9101 may be configured. However, the STxMP need not be applied for the first uplink physical channel 9100 and the second uplink physical channel 9101. Alternatively, the STxMP need not be expected to be applied for the first uplink physical channel 9100 and the second uplink physical channel 9101.

Hereinafter, processing of the medium access control layer processing unit 35 and the radio resource control layer processing unit 36 in one or both of Means 1 and Means 1a will be described.

The RRC layer may configure a first time alignment timer 9800 and a second time alignment timer 9801. For example, the RRC layer may configure the first time alignment timer 9800 and the second time alignment timer 9801 for one serving cell. For example, the first time alignment timer 9800 may be configured by a first higher layer parameter. For example, the second time alignment timer 9801 may be configured by a second higher layer parameter. The first higher layer parameter and the second higher layer parameter need not be the higher layer parameter timeAlignmentTimer. The first time alignment timer 9800 may control a first time. The first time may be a time at which the MAC entity considers at least the first TRP 9040 to belong to the first subTAG 9200. The second time alignment timer 9801 may control a second time. The second time may be a time at which the MAC entity considers at least the second TRP 9041 to belong to the second subTAG 9201.

The first time alignment timer 9800 may be started or restarted based at least on the first TA command 9050. The first time alignment timer 9800 may be associated with the first TRP 9040. The first time alignment timer may be associated with the first subTAG 9200. The first subTAG 9020 may identify the first TRP 9040 from among one or multiple TRPs. The first subTAG 9200 may include the first TRP 9040. For example, the first subTAG 9200 may include one or multiple TRPs corresponding to the first TA 9060. The first time alignment timer 9800 may be associated with the first TAG 9500. In other words, the first time alignment timer 9800 may be associated with the first subTAG 9200 and the first TAG 9500. A third time alignment timer 9802 may be associated with the first TAG 9500.

The second time alignment timer 9801 may be started or restarted based at least on the second TA command 9051. The second time alignment timer 9801 may be associated with the second TRP 9041. The second time alignment timer 9801 may be associated with the second subTAG 9201. The second subTAG 9201may identify the second TRP 9041 from among one or multiple TRPs. The second subTAG 9201 may include the second TRP 9041. For example, the second subTAG 9201 may include one or multiple TRPs corresponding to the second TA 9061. A second time alignment timer 9801 may be associated with the second TAG 9501. In other words, the second time alignment timer 9801 may be associated with the second subTAG 9201 and the second TAG 9501. The first TAG 9500 may be the same as the second TAG 9501. In other words, the third time alignment timer 9802 may be associated with the first TAG 9500. For example, the first subTAG 9200 and the second subTAG 9201 may correspond to one serving cell.

The first time alignment timer 9800 may be different from the second time alignment timer 9801. In other words, the first time alignment timer 9800 may be independent of the second time alignment timer 9801. For example, the first higher layer parameter configuring the first time alignment timer 9800 may be independent of the second higher layer parameter configuring the second time alignment timer 9801. The MAC entity may manage the first time alignment timer 9800 and the second time alignment timer 9801 in parallel.

The second TA command 9051 may be included in a TA command MAC CE or an absolute TA command MAC CE. For example, the TA command MAC CE or the absolute TA command MAC CE may include a field for identifying either the second TRP 9041 or the second subTAG 9201. In other words, the TA command MAC CE may include some or all of the TA command, the ID 9301 for the second subTAG, and the TRP information 9031 for the second TRP 9041. The absolute TA command MAC CE may include some or all of the TA command, the ID 9301 for the second subTAG, and the TRP information 9031 for the second TRP 9041.

In a case that the TA command MAC CE including the first TA command 9050 is received and the first N_{TA} is held by the first subTAG 9200, the MAC entity may apply the first TA command 9050. In the case that the TA command MAC CE including the first TA command 9050 is received and the first N_{TA} is held by the first subTAG 9200, the MAC entity may start or restart the first time alignment timer 9800 associated with the first TA command 9050.

In a case that the TA command MAC CE including the second TA command 9051 is received and the second N_{TA} is held by the second subTAG 9201, the MAC entity may apply the second TA command 9051. In the case that the TA command MAC CE including the second TA command 9051 is received and the second N_{TA} is held by the second subTAG 9201, the MAC entity may start or restart the second time alignment timer 9801 associated with the second TA command 9051. The MAC entity may manage some or all of the first time alignment timer 9800, the second time alignment timer 9801, and the third time alignment timer 9802.

In a case that the first time alignment timer 9800 is not running, the MAC entity may apply the first TA command 9050 and may start the first time alignment timer 9800. Further, in a case that a contention resolution in the first random access 9000 has not been completed successfully, the MAC entity may stop the first time alignment timer 9800. In a case that the second time alignment timer 9801 is not running, the MAC entity may apply the second TA command 9051 and may start the second time alignment timer 9801. Further, in a case that a contention resolution in the second random access 9001 has not been completed successfully, the MAC entity may stop the second time alignment timer 9801. The first time alignment timer 9800 and the second time alignment timer 9801 may be simultaneously running.

In a case that the first random access preamble 9010 is selected from the preamble in the CBRA and in a case that the first time alignment timer 9800 is running, the MAC entity may ignore the first TA command 9050. In a case that the second random access preamble 9011 is selected from the preamble in the CBRA and in a case that the second time alignment timer 9801 is running, the MAC entity may ignore the second TA command 9051.

The first time alignment timer 9800 and the second time alignment timer 9801 may correspond to one serving cell. In a case that the first time alignment timer 9800 or the second time alignment timer 9801 is expired, the MAC entity may flush all HARQ buffers for one serving cell. In the case that the first time alignment timer 9800 or the second time alignment timer 9801 is expired, the MAC entity may inform the RRC of releasing the PUCCH for one serving cell. In the case that the first time alignment timer 9800 or the second time alignment timer 9801 is expired, the MAC entity may inform the RRC of releasing the SRS for one serving cell. In the case that the first time alignment timer 9800 or the second time alignment timer 9801 is expired, the MAC entity may clear the configured downlink assignment and the configured uplink grant. In the case that the first time alignment timer 9800 or the second time alignment timer 9801 is expired, the MAC entity may clear the PUSCH resource for semi-persistent CSI reporting. In the case that the first time alignment timer 9800 or the second time alignment timer 9801 is expired, the MAC entity may consider that all time alignment timers corresponding to one serving cell are expired. In a case that the first time alignment timer 9800 is expired, the MAC entity may maintain the first N_{TA}. In a case that the second time alignment timer 9801 is expired, the MAC entity may maintain the second N_{TA}.

In a case that the first time alignment timer 9800 is not running (is expired), the MAC entity need not perform the first uplink transmission to at least the first TRP 9040. In a case that the second time alignment timer 9801 is not running (is expired), the MAC entity need not perform the second uplink transmission to at least the second TRP 9041. The first uplink transmission and the second uplink transmission need not include one or both of the random access preamble transmission and the message A transmission.

In a case that at least the first random access response 9020 has been received successfully, the MAC entity may apply (process) the first TA command 9050 for one serving cell. Based at least on the first random access response 9020 being considered to have been received successfully, and the first random access preamble 9010 being transmitted for one serving cell, the MAC entity may apply the first TA command 9040 for one or both of the one serving cell and the first TRP 9040.

The terminal apparatus 1 may include a receiver configured to receive a PDCCH to which first DCI is mapped. The terminal apparatus 1 may include a transmitter configured to transmit a first uplink physical channel, a transmission of the first uplink physical channel being indicated by the first DCI. The first DCI may schedule the first uplink physical channel. A transmission of a second uplink physical channel may be scheduled by second DCI. A transmission of the second uplink physical channel may be indicated by second DCI. The second uplink physical channel may be scheduled by a configured uplink grant. A transmission of the second uplink physical channel may be indicated by the configured uplink grant. Transmissions of the first uplink physical channel and the second uplink physical channel may be indicated on one serving cell. The first uplink physical channel may be associated with a first TAG (e.g., subTAG). The second uplink physical channel may be associated with a second TAG (e.g., subTAG). The first TAG and the second TAG may be TAGs on one serving cell.

The second uplink physical channel need not be transmitted in a case that a duration from the last OFDM symbol of the first uplink physical channel to the first OFDM symbol of the second uplink physical channel is within a predetermined time. The transmission of the second uplink physical channel need not be expected in a case that a duration from the last OFDM symbol of the first uplink physical channel to the second uplink physical channel is within the predetermined time. The transmission of the second uplink physical channel may be dropped, canceled, or omitted in the case that a duration from the last OFDM symbol of the first uplink physical channel to the second uplink physical channel is within the predetermined time. The predetermined time may be determined based on some or all of a maximum uplink transmission timing difference, a CP, a UE capability, a frequency range, and a higher layer parameter. The predetermined time may be defined using a real time. The predetermined time may be defined using T_{c}. The predetermined time may be used to switch between the first TAG and the second TAG.

The STxMP being applied for the first uplink physical channel and the second uplink physical channel may be configured. The STxMP being applied may be configured by a higher layer parameter. The STxMP being applied may be configured or determined based on the UE capability.

Various aspects of apparatuses according to an aspect of the present embodiment will be described below.
(1) In order to accomplish the object described above, an aspect of the present invention is contrived to provide the following means. Specifically, a first aspect of the present invention is a terminal apparatus including a receiver configured to receive a PDCCH to which first DCI is mapped, and a transmitter configured to transmit a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter. The transmission of the second uplink physical channel is not expected in a case that the transmission of the second uplink physical channel is indicated by second DCI and in a case that the duration from the first OFDM symbol to the second OFDM symbol is within the predetermined time, and the transmission of the second uplink physical channel is dropped, in a case that the transmission of the second uplink physical channel is indicated by a configured uplink grant and in the case that the duration from the first OFDM symbol to the second OFDM symbol is within the predetermined time. STxMP being applied for one or both of the first uplink physical channel and the second uplink physical channel is configured by a higher layer parameter.
(2) A second aspect of the present invention is a base station apparatus including a transmitter to transmit a PDCCH to which first DCI is mapped, and a receiver configured to receive a first uplink physical channel, a transmission of the first uplink physical channel being indicated by the first DCI, wherein a transmission of a second uplink physical channel is indicated, the first uplink physical channel is associated with a first TAG, the second uplink physical channel is associated with a second TAG, the first TAG and the second TAG correspond to one serving cell, the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and the predetermined time is determined based on some or all of a maximum uplink transmission timing difference, a CP, a UE capability, a frequency range, and a higher layer parameter. The transmission of the second uplink physical channel is not expected in a case that the transmission of the second uplink physical channel is indicated by second DCI and in a case that the duration from the first OFDM symbol to the second OFDM symbol is within the predetermined time, and the transmission of the second uplink physical channel is dropped, in a case that the transmission of the second uplink physical channel is indicated by a configured uplink grant and in the case that the duration from the first OFDM symbol to the second OFDM symbol is within the predetermined time. STxMP being applied for one or both of the first uplink physical channel and the second uplink physical channel is configured by a higher layer parameter.

A program running on the base station apparatus 3 and the terminal apparatus 1 according to an aspect of the present invention may be a program (a program that causes a computer to function) that controls a Central Processing Unit (CPU) and the like so as to implement the functions of the above-described embodiment according to an aspect of the present invention. The information handled in these apparatuses is temporarily loaded into a Random Access Memory (RAM) while being processed, is then stored in a Hard Disk Drive (HDD) and various types of Read Only Memory (ROM) such as a Flash ROM, and is read, modified, and written by the CPU, as necessary.

Note that the terminal apparatus 1 and the base station apparatus 3 according to the above-described embodiment may be partially implemented by a computer. In that case, this configuration may be implemented by recording a program for implementing such control functions on a computer-readable recording medium and causing a computer system to read the program recorded on the recording medium for execution.

Note that it is assumed that the "computer system" mentioned here refers to a computer system built into the terminal apparatus 1 or the base station apparatus 3, and the computer system includes an OS and hardware components such as peripheral devices. In addition, the "computer-readable recording medium" refers to a portable medium such as a flexible disk, a magneto-optical disk, a ROM, and a CD-ROM, and a storage apparatus such as a hard disk built into the computer system.

Moreover, the "computer-readable recording medium" may include a medium that dynamically stores a program for a short period of time, such as a communication line in a case that the program is transmitted over a network such as the Internet or over a communication line such as a telephone line, and may also include a medium that stores the program for a certain period of time, such as a volatile memory included in the computer system functioning as a server or a client in such a case. In addition, the above-described program may be one for implementing some of the above-described functions, and also may be one capable of implementing the above-described functions in combination with a program already recorded in a computer system.

Furthermore, the base station apparatus 3 according to the aforementioned embodiment may be implemented as an aggregation (apparatus group) including multiple apparatuses. Each of the apparatuses included in such an apparatus group may include a part or all of each function or each functional block of the base station apparatus 3 according to the aforementioned embodiment. As the apparatus group, it is only necessary to have all of functions or functional blocks of the base station apparatus 3. Moreover, the terminal apparatus 1 according to the aforementioned embodiment can also communicate with the base station apparatus as the aggregation.

Also, the base station apparatus 3 according to the aforementioned embodiment may be an Evolved Universal Terrestrial Radio Access Network (EUTRAN) and/or a NextGen RAN (NG-RAN or NR RAN). Moreover, the base station apparatus 3 according to the aforementioned embodiment may have a part or all of the functions of a higher node for an eNodeB and/or a gNB.

Also, a part or all portions of each of the terminal apparatus 1 and the base station apparatus 3 according to the aforementioned embodiment may be implemented as an LSI, which is typically an integrated circuit, or may be implemented as a chip set. The functional blocks of each of the terminal apparatus 1 and the base station apparatus 3 may be individually implemented as a chip, or a part or all of the functional blocks may be integrated into a chip. Furthermore, a circuit integration technique is not limited to the LSI and may be implemented with a dedicated circuit or a general-purpose processor. Moreover, in a case that a circuit integration technology that substitutes an LSI appears with the advance of the semiconductor technology, it is also possible to use an integrated circuit based on the technology.

In addition, although the aforementioned embodiments have described the terminal apparatus as an example of a communication apparatus, the present invention is not limited to such a terminal apparatus, and is also applicable to a terminal apparatus or a communication apparatus that is a stationary type or a non-movable type electronic apparatus installed indoors or outdoors, for example, such as an AV device, a kitchen device, a cleaning or washing machine, an air-conditioning device, office equipment, a vending machine, and other household appliances.

Although the embodiments of the present invention have been described in detail above referring to the drawings, the specific configuration is not limited to the embodiments and includes, for example, design changes within the scope that do not depart from the gist of the present invention. For an aspect of the present invention, various modifications are possible within the scope of the claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 Base station apparatus
10, 30 Radio transmission and/or reception unit
10a, 30a Radio transmission unit
10b, 30b Radio reception unit
11, 31 Antenna unit
12, 32 RF unit
13, 33 Baseband unit
14, 34 Higher layer processing unit
15, 35 Medium access control layer processing unit
16, 36 Radio resource control layer processing unit
91, 92, 93, 94 Search space set
300 Component carrier
301 Primary cell
302, 303 Secondary cell
700 Set of resource elements for PSS
710, 711, 712, 713 Set of resource elements for PBCH and DMRS for PBCH
720 Set of resource elements for SSS
3000 Point
3001, 3002 Resource grid
3003,3004 BWP
3011, 3012, 3013, 3014 Offset
3100, 3200 Common resource block set
9000, 9001 Random access (random access procedure)
9010, 9011 Random access preamble
9020, 9021 Random access response
9030, 9031 TRP information
9040, 9041 TRP
9050, 9051 TA command
9060, 9061 TA
9070, 9071 Uplink timing
9080, 9081 Uplink frame
9082 Downlink subframe
9090 Predetermined time
9100, 9101 Uplink physical channel
9200, 9201 SubTAG
9300, 9301 TAG ID
9400, 9401 TA offset
9500, 9501 TAG
9600, 9601 Slot
9700, 9701 OFDM symbol
9800, 9801, 9802 Time synchronization timer

## Claims

1. A terminal apparatus comprising:
a receiver configured to receive a PDCCH to which first DCI is mapped; and
a transmitter configured to transmit a first uplink physical channel, a transmission of the first uplink physical channel being indicated by the first DCI, wherein
a transmission of a second uplink physical channel is indicated,
the first uplink physical channel is associated with a first TAG,
the second uplink physical channel is associated with a second TAG,
the first TAG and the second TAG correspond to one serving cell,
the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and
the predetermined time is determined based on some or all of a maximum uplink transmission timing difference, a CP, a UE capability, a frequency range, and a higher layer parameter.

2. The terminal apparatus according to claim 1, wherein
the transmission of the second uplink physical channel is not expected in a case that the transmission of the second uplink physical channel is indicated by second DCI and in a case that the duration from the first OFDM symbol to the second OFDM symbol is within the predetermined time, and
the transmission of the second uplink physical channel is dropped in a case that the transmission of the second uplink physical channel is indicated by a configured uplink grant and in the case that the duration from the first OFDM symbol to the second OFDM symbol is within the predetermined time.

3. The terminal apparatus according to claim 1, wherein
STxMP being applied for one or both of the first uplink physical channel and the second uplink physical channel is configured by a higher layer parameter.

4. A base station apparatus comprising:
a transmitter configured to transmit a PDCCH to which first DCI is mapped; and
a receiver configured to receive a first uplink physical channel, a transmission of the first uplink physical channel being indicated by the first DCI, wherein
a transmission of a second uplink physical channel is indicated,
the first uplink physical channel is associated with a first TAG,
the second uplink physical channel is associated with a second TAG,
the first TAG and the second TAG correspond to one serving cell,
the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and
the predetermined time is determined based on some or all of a maximum uplink transmission timing difference, a CP, a UE capability, a frequency range, and a higher layer parameter.

5. The base station apparatus according to claim 4, wherein
the transmission of the second uplink physical channel is not expected in a case that the transmission of the second uplink physical channel is indicated by second DCI and in a case that the duration from the first OFDM symbol to the second OFDM symbol is within the predetermined time, and
the transmission of the second uplink physical channel is dropped in a case that the transmission of the second uplink physical channel is indicated by a configured uplink grant and in the case that the duration from the first OFDM symbol to the second OFDM symbol is within the predetermined time.

6. The base station apparatus according to claim 4, wherein
STxMP being applied for one or both of the first uplink physical channel and the second uplink physical channel is configured by a higher layer parameter.

7. A communication method used for a terminal apparatus, the method comprising:
receiving a PDCCH to which first DCI is mapped; and
transmitting a first uplink physical channel, a transmission of the first uplink physical channel being indicated by the first DCI, wherein
a transmission of a second uplink physical channel is indicated,
the first uplink physical channel is associated with a first TAG,
the second uplink physical channel is associated with a second TAG,
the first TAG and the second TAG correspond to one serving cell,
the second uplink physical channel is not transmitted in a case that a duration from a first OFDM symbol to a second OFDM symbol is within a predetermined time, the first OFDM symbol being a last OFDM symbol of the first uplink physical channel, the second OFDM symbol being a first OFDM symbol of the second uplink physical channel, and
the predetermined time is determined based on some or all of a maximum uplink transmission timing difference, a CP, a UE capability, a frequency range, and a higher layer parameter.
